# EUROPÄISCHE PATENTSCHRIFT

(11) **EP 0 629 788 B1**
(45) Veröffentlichungstag und Bekanntmachung des Hinweises auf die Patenterteilung: **02.06.1999**
(21) Anmeldenummer: 94105806.7
(22) Anmeldetag: 14.04.1994
(51) Int. Cl.: F16C 29/04, F16C 29/06, F16C 33/66, B23Q 11/08, F16C 29/08

(54) **Linearführungseinrichtung mit Laufbahnschmierelementen**
Linear guiding device with rail race lubricating elements
Guidage linéaire avec éléments de graissage de la surface de roulement du rail

(30) Priorität: 16.04.1993 DE 4312470; 09.02.1994 DE 4404109
(43) Veröffentlichungstag der Anmeldung: 21.12.1994
(73) Patentinhaber: Deutsche Star GmbH, 97424 Schweinfurt (DE)
(72) Erfinder: Blaurock, Günter, D-97464 Niederwerrn (DE); Klein, Michael, D-97506 Grafenrheinfeld (DE)
(74) Vertreter: Weickmann, Heinrich, Dipl.-Ing.

(56) Entgegenhaltungen:
- WO-A-93/12351
- DE-U- 9 317 161
- FR-A- 2 142 463
- US-A- 3 890 021
- US-A- 5 201 386

## Beschreibung

Die Erfindung betrifft eine Linearführungseinrichtung, umfassend eine Führungsschiene mit einer Achse und mindestens einer Laufbahn und mindestens einen Führungswagen mit mindestens einem im Betriebszustand an dieser Laufbahn geführten Laufelement, wobei an dem Führungswagen ein Behandlungselemententräger für mindestens ein Schienenbehandlungselement, insbesondere ein Laufbahnbehandlungselement, angebracht ist, und wobei dieses Schienenbehandlungselement an dem Behandlungselemententräger in einer im wesentlichen achsnormalen Ebene durch Führungsmittel geführt und gegen die Führungsschiene vorgespannt ist.

Eine solche Linearführungseinrichtung ist durch einen Prospekt "INA-Laufrollenführung - Baureihe LF", herausgegeben von der INA Lineartechnik OHG im März 1992, bekannt. Bei der bekannten Ausführungsform ist das als Laufbahnschmierelement ausgebildete Schienenbehandlungselement durch eine Schraubendruckfeder leicht ausschiebbar, wenn der Führungswagen von der Führungsschiene abgezogen wird.

Aus der US-A 5 201 386 ist bei einem Rotationslager ein durch eine Drahtwendel stabilisierter Schmierdocht bekannt, den man in ein Reservoir hineinfallen läßt, bevor das Reservoir im Lagerbereich montiert wird. Dieser Docht liegt gegen eine zu schmierende Umfangsfläche eines relativ zu dem Docht umlaufenden Lagerteils an. Stellt man sich vor, daß dieses Lagerteil ausgebaut ist, so kann der Schmierdocht leicht herausfallen.

Aus der EP 0 512 253 Al ist eine Linearführungseinrichtung mit einer Abstreifereinheit bekannt, bei welcher die Abstreifereinheit von mehreren biegeelastischen Zungen gebildet ist, welche sich vor der Montage der Abstreifereinheit an dem Führungswagen in einer gemeinsamen Ebene befinden und im eingebauten Zustand mit ihren Enden an den zugehörigen Laufflächenabschnitten der Führungsschiene anliegen.

Der Erfindung liegt die Aufgabe zugrunde, bei einer eingangs definierten Linearführungseinrichtung dafür zu sorgen, daß auch beim Abziehen des Führungswagens von der Führungsschiene die aus Behandlungselemententräger und Schienenbehandlungselement bestehende Baugruppe trotz der Vorspannung als Einheit zusammenbleibt.

Zur Lösung dieser Aufgabe wird vorgeschlagen, daß das Schienenbehandlungselement in den Führungsmitteln des Behandlungselemententrägers durch Verlustsicherungsmittel gesichert ist, welche von der Führungsschiene unabhängig sind. Durch die Anwendung der von der Führungsschiene unabhängigen Verlustsicherungsmittel zum Sichern des Schienenbehandlungselements in den Führungsmitteln wird erreicht, daß beim Abziehen des Führungswagens von der Führungsschiene das Schienenbehandlungselement nicht verlorengehen kann und beim Wiederzusammenbau am richtigen Ort zur Verfügung steht.

Eine weitere Ausgestaltung der Erfindung für den Fall eines Laufbahnschmierelements besteht darin, daß der Behandlungselemententräger als ein Schmierelemententräger für ein Laufbahnschmierelement ausgebildet ist, daß dieses Laufbahnschmierelement aus einem Schmiermittel verteilenden und bezüglich der Laufbahn anschmiegfähigen Werkstoff besteht und daß dieses Laufbahnschmierelement mit einem Schmiermittelvorrat des Schmierelemententrägers in Verbindung steht, wobei das Laufbahnschmierelement in einer Schmierelementenfassung unverlierbar aufgenommen ist und die Schmierelementenfassung in dem Schmierelemententräger ebenfalls unverlierbar aufgenommen und in einer zur Achse im wesentlichen orthogonalen Richtung beweglich geführt und in Richtung auf die Laufbahn vorgespannt ist.

Durch die Führung des Laufbahnschmierelements in dem Schmierelemententräger vermittels einer Schmierelementenfassung wird eine definierte Führungsreibung des Laufbahnschmierelements gegenüber dem Schmierelemententräger erzielt, unabhängig von der Art und insbesondere den Oberflächeneigenschaften des Laufbahnschmierelements. Damit ist sichergestellt, daß der Andruck und damit die Schmiermittelverteilung des Laufbahnschmierelements auf der jeweiligen Laufbahn stets wohl definiert ist.

Während bei der vorbekannten Lösung der Schmiermittelvorrat auf das Volumen jeweils einer kleinen Kammer beschränkt ist, ist nach einer Weiterbildung der erfindungsgemäßen Lösung vorgesehen, daß der Schmiermittelvorrat außerhalb der Schmierelementenfassung, jedoch innerhalb des Schmierelemententrägers untergebracht ist und daß eine Schmiermittelverbindung zwischen dem Schmiermittelvorrat und dem innerhalb der Schmierelementenfassung aufgenommenen Laufbahnschmierelement besteht. Bei dieser Ausgestaltung kann ein großer Teil eines innerhalb des Schmierelemententrägers verfügbaren Hohlraums zur Aufnahme von Schmiermittelvorrat genutzt werden, so daß Schmiermittel entweder für die gesamte zu erwartende Lebensdauer zur Verfügung steht, oder aber jedenfalls so viel Schmiermittel, daß eine Schmiermittelnachfüllung nur in großen Zeitabständen notwendig ist.

Eine besonders günstige konstruktive Ausgestaltung des Erfindungsgedankens sieht vor, daß die Schmierelementenfassung ein Fassungsgehäuse aufweist mit einem zu der Führungsrichtung der Schmierelementenfassung im wesentlichen parallelen Mantelfläche, wobei dieses Fassungsgehäuse ein zur Laufbahn hin offenes Ende aufweist und das Laufbahnschmierelement über dieses offene Ende in Richtung auf die Laufbahn hin vorsteht. Bei dieser konstruktiven Ausgestaltung erhält man optimale Führungsverhältnisse für die Schmierelementenfassung innerhalb des Schmierelemententrägers.

Dabei kann die ständige Verbindung zwischen einem stationär innerhalb des Schmierelemententrägers aufgenommenen Schmiermittelvorrat und dem Laufbahnschmierelement dadurch hergestellt werden, daß das Fassungsgehäuse an seinem laufbahnfernen Ende eine Öffnung besitzt, welche in Verbindung mit dem Schmiermittelvorrat steht.

Der unbeabsichtigte Schmiermittelaustritt zur Führungsschiene und zur Umgebung hin kann dadurch verhindert werden, daß das Fassungsgehäuse durch eine an seiner Mantelfläche anliegende, im wesentlichen ringsum anliegende, Dichtstelle des Schmierelemententrägers hindurchgeführt ist.

Die Unverlierbarkeit der Schmierelementenfassung innerhalb des Schmierelemententrägers kann auf einfache Weise dadurch erzielt werden, daß die Schmierelementenfassung einen Anschlag besitzt, welcher im Zusammenwirken mit einem Gegenanschlag des Schmierelemententrägers die Beweglichkeit der Schmierelementenfassung in Richtung auf die Laufbahn begrenzt. Dabei ist insbesondere auch zu erwähnen, daß sowohl der Schmierelemententräger als auch die Schmierelementenfassung als Spritzgußteile, insbesondere aus hartplastischem Kunststoff oder Leichtmetall hergestellt werden können, so daß die beidseitigen Anschläge leicht im Zuge der jeweiligen Formgebung erhalten werden können. Insbesondere ist es denkbar, daß bei Ausführung der Schmierelementenfassung mit einem Fassungsgehäuse der Anschlag von einem auswärts abstehenden Bund des Fassungsgehäuses an dessen laufbahnfernem Ende gebildet ist.

Um bei einfacher Komponentengestaltung einerseits das Laufbahnschmierelement schon beim Zusammenbau leicht positionieren zu können und andererseits auch die Positionierung der Vorspannmittel zu erleichtern wird vorgeschlagen, daß das Fassungsgehäuse an mittlerer Stelle seiner in seiner Führungsrichtung verlaufenden Länge ein Stützglied aufweist, welches einerseits als Anschlag für das von dem laufbahnnahen Ende her in das Fassungsgehäuse eingeführte Laufbahnschmierelement und andererseits als Anschlag für eine Vorspannfeder dient, welche an dem Schmierelemententräger abgestützt ist. Will man als Vorspannmittel eine Schraubendruckfeder verwenden, so ist es möglich, daß das Stützglied mit einem Zentrierdorn für diese Schraubendruckfeder ausgeführt ist.

Um mit einfachen Gestaltungsmaßnahmen und ohne spanabhebende Formvorgänge die Schmiermittelverbindung zwischen Schmiermittelvorrat und Laufbahnschmierelement erhalten zu können, wird vorgeschlagen, daß das Stützglied nur einen Teil des Querschnitts des Fassungsgehäuses ausfüllt und seitliche Durchgänge für das Schmiermittel innerhalb des Fassungsgehäuses frei läßt.

Um die Unverlierbarkeit des Laufbahnschmierelements gegenüber der Schmierelementenfassung mit geringstem konstruktiven Aufwand sicherzustellen wird vorgeschlagen, daß das Laufbahnschmierelement innerhalb der Schmierelementenfassung im Reibsitz aufgenommen ist. Diese Ausgestaltung stellt gleichzeitig sicher, daß kein den Schmiermittelbedarf der Führungsbahn überschreitender Schmiermittelaustritt durch die Schmierelementenfassung hindurch stattfinden kann.

Es ist denkbar, das Laufbahnschmierelement mit speziellen Kanälen zur Schmiermittelleitung zu versehen. Bevorzugt wird man jedoch vorsehen, daß das Laufbahnschmierelement von porösem, schmiermittelleitendem Werkstoff gebildet ist. Die Porösität wird dabei jeweils entsprechend der Schmiermittelkonsistenz so eingestellt, daß eine ausreichende Schmiermittelversorgung der Laufbahn in Folge Permeation des Schmiermittels durch den porösen Körper gewährleistet ist. Die Bemessung der Vorspannkraft der Feder kann durch einfache Vorversuche so gewählt werden, daß eine optimale Schmiermittelzufuhr zu der Laufbahn stets gewährleistet ist.

Bevorzugt verwendet man als Werkstoff für das jeweilige Laufbahnschmierelement ein Material, das ausreichend formsteif ist, um unter dem Druck der Vorspanneinrichtung seine Gestalt im großen und ganzen beizubehalten, wobei auch die Formstabilisierung durch die einen Großteil des Laufbahnschmierelements stützenden Schmierelementenfassung zu berücksichtigen ist. Andererseits wählt man bevorzugt einen Werkstoff, der unter Berücksichtigung der anzuwendenden Vorspannkräfte nachgiebig genug ist, um nach grober Profilanpassung an das Profil der jeweiligen Laufbahn sich dieser hinreichend gleichmäßig anzuschmiegen im Sinne einer gleichmäßigen Schmiermittelzufuhr zu der gesamten Profilfläche der Laufbahn. Unter Berücksichtigung der vorstehend erwähnten Kriterien kann man für die Herstellung des Laufbahnschmierelements insbesondere einen mittelsteifen Filz verwenden, was an sich aus der oben erwähnten offenkundigen Vorbenutzung bereits bekannt ist.

Die Abdichtung gegen unbeabsichtigten Austritt von Schmiermittel aus dem Schmiermittelvorrat kann dabei dadurch gewährleistet werden, daß das Laufbahnschmierelement in einer als Fassungsgehäuse ausgebildeten Schmierelementenfassung im wesentlichen den gesamten Gehäusequerschnitt ausfüllt.

Für die Frage der ausreichenden Schmiermittelzufuhr zu der Laufbahn einerseits und der Unterdrückung von übermäßigen Schmiermittelaustritt andererseits ist die Struktur des für das Laufbahnschmierelement eingesetzten Werkstoffs, insbesondere Filzes, von entscheidender Bedeutung und unter diesem Gesichtspunkt wird man bevorzugt dafür Sorge tragen, daß das Laufbahnschmierelement mit einer derartigen Schmiermittelleitfähigkeit bezogen auf die Viskosität des jeweils eingesetzten Schmiermittels ausgeführt ist, daß im wesentlichen kein Schmiermittelverlust in Richtung senkrecht zur Führungsrichtung des Laufbahnschmierelements eintritt.

In der Regel benötigt man zur eindeutigen Führung eines Führungswagens auf einer Führungsschiene mehrere Laufbahnen und dementsprechend zum Eingriff mit diesen Laufbahnen jeweils mindestens ein Führungselement. Um die Herstellung und die Montage der Schmiereinrichtung bei einer solchen Konstruktion zu vereinfachen ist vorgesehen, daß bei Vorhandensein mehrerer Laufbahnen an der Führungsschiene an ein und demselben Schmierelemententräger in Zuordnung zu jeder dieser Laufbahnen mindestens ein Laufbahnschmierelement vorgesehen ist.

Bei U-förmiger Gestaltung des Führungswagens und reiterförmiger Anordnung des U-förmig gestalteten Führungswagens auf der Führungsschiene ergibt sich dabei bevorzugt eine Zuordnung dergestalt, daß an ein und demselben Schmierelemententräger zwei einander gegenüberstehende Laufbahnschmierelemente vorgesehen sind, wobei deren Schmierelementenfassungen annähernd miteinander fluchtende Führungsrichtungen aufweisen.

Es soll nicht ausgeschlossen werden, daß der Schmierelemententräger an beliebigem Ort, insbesondere auch im Bereich der Längsmitte zwischen aufeinander folgenden, ein und derselben Laufbahn zugeordneten Führungselementen angebracht wird. Bevorzugt wird jedoch aus herstellungs- und montagetechnischen Gründen vorgesehen, daß der Schmierelemententräger als ein plattenförmiges Gebilde ausgebildet ist, welches an einer zur Achse der Führungsschiene im wesentlichen orthogonalen Endfläche des Führungswagens angebracht ist. Damit ist automatisch die Größe des Schmierelemententrägers in Anpassung an die Größe der Führungsbahnen und an die Zahl der Führungsbahnen anpaßbar, etwa in der Weise, daß man - in Achsrichtung der Führungsschiene betrachtet - dem plattenförmigen Schmierelemententräger einen wenigstens annähernd mit dem Umriß des Führungswagens entsprechenden Umriß verleiht.

Gelegentlich besteht die Forderung, daß an den Endflächen des Führungswagens eine möglichst enge Konturanpassung an das Führungsschienenprofil vorgenommen wird, um das Eindringen von Spänen oder sonstigen Verunreinigungen zwischen Führungswagen und Schienen zu verhindern. Dies gilt insbesonders wenn entsprechend einem bevorzugten Anwendungsbeispiel der erfindungsgemäßen Linearführungseinrichtung diese zum Einsatz an Werkzeugmaschinen, etwa spanabhebenden Werkzeugmaschinen als Werkstückträger oder Werkzeugträger eingesetzt wird. Demgemäß kann es von Vorteil sein, wenn der Schmierelemententräger eine innere Umfangskontur besitzt, welche annähernd dem Außenquerschnitt der Führungsschiene angepaßt ist und an dieser gegebenenfalls über eine der Kontur folgende Dichtung anliegt, wobei das mindestens eine Laufbahndichtungselement über diese Umfassungskontur in Richtung auf die jeweilige Laufbahn vorsteht. Bei einer solchen Gestaltung dient dann der plattenförmige Schmierelemententräger gleichzeitig als Abstreifvorrichtung, die einerseits das Eindringen von Schmutzteilchen zwischen Führungswagen und Führungsschiene verhindert und andererseits die Schmiermitteldosage der Laufbahnen im wesentlichen auf die jeweilige axiale Länge des Führungswagens beschränkt.

Die weiter oben schon angedeutete, bei der erfindungsgemäßen Lösung bestehende Möglichkeit der Vergrößerung des Schmiermittelvorratsraums erlaubt es, daß innerhalb des Schmierelemententrägers eine Lebensdauerfüllung von Schmiermittel enthalten ist.

Es soll aber auch nicht ausgeschlossen werden, daß der Schmiermittelvorrat mit einem Schmiermittelanschluß für ein Schmiermittelnachfüllgerät ausgebildet ist, vorzugsweise in Form eines Schmiernippels mit Rückschlagwirkung. In diesem Falle kann jedenfalls der Zeitabstand zwischen aufeinanderfolgenden Schmiermittelnachfüllvorgängen sehr gestreckt werden.

Während nach dem Stand der Technik einzelne Laufbahnschmierelemente jeweils mit einem individuell zugeordneten Schmiermittelvorrat verbunden sind, ist erfindungsgemäß die Möglichkeit gegeben und deshalb bevorzugt auch genutzt, daß bei Anordnung mehrerer Laufbahnschmierelemente an einem gemeinsamen Schmierelemententräger diese mit einem gemeinsamen Schmiermittelvorrat in Verbindung stehen.

Um die aus Herstellungs- und Einsatzgründen gewählte Form des Führungswagens durch den Anbau der Laufbahnschmiereinrichtung möglichst nicht zu verändern und möglichst wenig zu vergrößern ist vorgesehen, daß der Dichtelemententräger als ein Flachgehäuse ausgebildet ist, welches an mindestens einer zur Achsrichtung der Führungsschiene im wesentlichen orthogonalen Endfläche des Führungswagens als gesondertes Bauteil des Führungswagens gegebenenfalls lösbar befestigt ist; dabei ist auch hier wieder insbesondere an Konturgleichheit bei Betrachtung in Achsrichtung der Führungsschiene gedacht.

Um mit einfachsten Herstellungsmethoden innerhalb des Flachgehäuses die Führungsmittel und möglichst große Räume für die Unterbringung des Schmiermittelvorrats bereitzustellen wird daran gedacht, daß das Flachgehäuse aus zwei sandwichartig aneinander anliegenden Flachgehäuseteilen zusammengesetzt ist.

Unter Berücksichtigung der für die Herstellung insbesonders in Betracht gezogenen Gieß- und Spritz-Gieß-Methoden für Kunststoff und Leichtmetall oder auch Zink wird weiter in Anpassung an die Möglichkeiten diese Formgebungsmethoden vorgeschlagen, daß die Flachgehäuseteile von jeweils einer Hauptwand und von über dieser Hauptwand sich orthogonal zu dieser erhebenden Rippen gebildet ist, welche im zusammengebauten Zustand in bezug auf eine gemeinsame zu den Hauptwänden parallele Mittelebene prinzipiell spiegelsymmetrisch ausgebildet sind. Die Rippen am Rande können dann die Abdichtung nach außen übernehmen und innere Rippen können Schmiermittelvorratsräume in günstiger Zuflußnähe zu den Laufbahnschmierelementen begrenzen. Weitere Rippen können Schmiermittelversorgungskanäle bilden, die entweder zu den Laufbahnschmierelementen oder zu Anschlußstellen für Schmiermittelnachfüllung definieren.

Aus Kostenersparnisgründen im Formenbau bei der Teileherstellung und auch in der Lagerhaltung wird vorgeschlagen daß die Flachgehäuseteile identisch ausgebildet sind.

Bei identischer Herstellung der Flachgehäuseteile können Schwierigkeiten in der Abdichtung und bei der Eingriffsherstellung zwischen diesen identisch hergestellten Teilen dadurch vermieden werden, daß an in zusammengebauten Zustand des Flachgehäuses aneinander anliegenden Rippenkopfflächen der Rippen Dicht- und/oder Befestigungsmittel jeweils nur über einen Halbbereich der Flachgehäuseteile angeordnet sind derart, daß sich diese im zusammengebauten Zustand über die gesamte Berührungsfläche der Flachgehäuseteile verteilt ergänzen. Stellt man die Teile nach diesem Prinzip aus Kunststoff her, so lassen sich diese Teile auf einfachste Weise dicht zusammensetzen, etwa durch Schweißen, Kleben oder auch durch schnappenden Formschluß von ineinandergreifenden Verbindungselementen. Aus Dichtigkeitsgründen ist eine Ultraschallverschweißung besonders bevorzugt.

Weiter wird vorgeschlagen, daß der Schmierelemententräger als ein den Schmiermittelvorrat und Schmiermittelleitungswege nach außen dicht abschließendes Gehäuse ausgebildet ist, welches einen Schmiermittelaustritt nur im Bereich des mindestens einen Laufbahnschmierelements aufweist. Hierzu ist zu bemerken, daß man dann im Gegensatz zum Stand der Technik, wo der Hohlraum zwischen einer Hohlplatte und einer Endfläche des Führungswagens gebildet ist den geschlossenen Hohlraum auch dann noch aufrecht erhält, wenn man den Schmiermittelträger als ganzen von dem Führungswagen entfernt. Die Verunreinigung der Umgebung durch Schmiermittel bei Abnahme des Schmierelemententrägers von dem Führungswagen ist dann ausgeschlossen.

Natürlich muß man für eine Füllstelle in dem Gehäuse sorgen, gleichgültig ob eine Lebensdauerfüllung oder eine erneuerbare Füllung vorgesehen ist. Um dennoch den unbeabsichtigten Austritt von Schmiermittel zu unterbinden kann man dann vorsehen, daß die Füllstelle mit einem lösbaren Verschluß oder einem Rückschlagnippel ausgeführt ist.

Alternativ ist es bei zu erwartender Betriebsorientierung der Linearführung denkbar, daß die Füllstelle an einem betriebsmäßig oberhalb des Schmiermittelvorrats liegenden Ort angeordnet ist; in diesem Fall kann man auf einen Anschluß der Füllstelle unter Umständen verzichten.

Da häufig die Befestigung des Gehäuses an dem Führungswagens mittels öffnungen erfolgen wird, die von Schrauben durchgriffen werden, wird weiter empfohlen, daß die Gehäuseteile von Befestigungsöffnungen zur Befestigung an dem Führungswagen durchsetzt sind und daß die Gehäuseteile auch im Umgebungsbereich dieser Befestigungsöffnungen gegeneinander abgedichtet sind; auf diese Weise wird ein Schmiermittelaustritt auch an den Befestigungsöffnungen vermieden.

Im Hinblick auf die weiter oben erwähnten dichtenden Durchführungen für die Schmierelementenfassungen wird man bei der Gehäusegestaltung auch daran denken müssen, daß an den Gehäuseteilen Halbaufnahmekammern für die Aufnahme jeweils der Hälfte eines Dichtrings angeordnet sind, welcher Dichtring von der jeweiligen Schmierelementenfassung durchsetzt wird.

Der Erfindungsvorschlag ist grundsätzlich auch bei Linearführungen anwendbar, bei denen der Führungswagen durch umlaufende Wälzkörperreihen an der Führungsschiene geführt ist. Insbesondere ist die erfindungsgemäße Gestaltung anwendbar dann, wenn das mindestens eine Führungselement von einer Führungsrolle gebildet ist. Dabei ist insbesondere an solche Ausgestaltungen gedacht, bei denen die Führungsrolle eine konkave Mantelfläche besitzt, welche mit einem komplementären, die Führungsbahn bildenden Profil in Eingriff steht. Insbesondere ist es denkbar, daß das Profil von einer Stange mit annähernd Kreisquerschnitt gebildet ist, welche auf einer Trägerschiene befestigt ist. Wiederum gilt auch hier, daß der Führungswagen die Führungsschiene angenähert U-förmig umgreifen kann und insbesondere daß an den beiden Schenkeln des U-förmig umgreifenden Führungswagens jeweils mindestens eine Führungsrolle angeordnet ist.

Nach einer bevorzugten Ausführungsform der Erfindung ist der Behandlungselemententräger zusammen mit dem mindestens einen Schienenbehandlungselement zu einer im wesentlichen vollständig vormontierten und bevorzugt vollständig vormontierten Baueinheit zusammengefaßt, wobei an dieser Baueinheit Befestigungsmittel vorgesehen sind, welche die Befestigung an dem Führungswagen gestatten. Auf diese Weise wird die Anbringung oder der Austausch besonders einfach, insbesondere auch dann, wenn die Linearführungseinrichtung an beengter Stelle innerhalb einer Werkzeugmaschine, einer Montagemaschine, einer Meßeinrichtung oder eines Roboters untergebracht ist.

Bevorzugt wird das Schienenbehandlungselement innerhalb des Behandlungselemententrägers durch Geradführungsmittel, also z.B. Geradführungsschienen, geführt. Auf diese Weise wird sichergestellt, daß das Schienenbehandlungselement an der Führungsschiene gleichmäßig über die ganze Länge des Profilbereichs der Führungsschiene angreift, mit dem das Behandlungselement zusammenwirken soll.

Die Verlustsicherung des Schienenbehandlungselements kann, insbesondere im Falle einer Geradführung, durch Anschlagmittel erfolgen, welche im Zusammenwirken mit Gegenanschlagmitteln des Behandlungselemententrägers die durch die Führungsmittel belassene Beweglichkeit des Schienenbehandlungselements derart beschränken, daß das Schienenbehandlungselement nicht aus der zugehörigen Führung herausfallen kann.

An ein und demselben Behandlungselemententräger können Führungsmittel für eine Mehrzahl von Schienenbehandlungselementen vorgesehen sein. Auf diese Weise wird die Anbringung der Schienenbehandlungselemente an einem Führungswagen noch weiter erleichtert. Man kann ohne lange Betriebsunterbrechung mit wenigen einfachen Handgriffen sämtliche Schienenbehandlungselemente gleichzeitig an dem Führungswagen abbauen oder anbringen.

Beispielsweise können an ein und demselben Behandlungselemententräger zwei einander gegenüberliegende Schienenbehandlungselemente vorgesehen sein, etwa dann, wenn an einer Führungsschiene an zwei voneinander abgelegenen Seitenflächen je eine oder zwei oder mehrere Laufbahnen angebracht sind und diese Laufbahnen einer Behandlung unterworfen werden sollen, z.B. einer Schmierbehandlung.

Eine besonders einfache Befestigung des Behandlungselemententrägers an dem Führungswagen ergibt sich dann, wenn der Behandlungselemententräger mit einer im wesentlichen planen Anlagefläche zum Anbau an einer im wesentlichen orthogonalen Stirnfläche des Führungswagens ausgeführt ist. Man kann dann an dem Behandlungselemententräger im wesentlichen orthogonal zu seiner Anlagefläche verlaufende Befestigungslöcher vorsehen und den Behandlungselemententräger durch Befestigungsbolzen, etwa Gewindebolzen,an der Stirnfläche des Führungswagens, befestigen. Die Befestigungsbolzen können dabei gleichzeitig die Positionierung des Behandlungselemententrägers an dem Führungswagen übernehmen. Es können aber auch gesonderte Positionierungsmittel an dem Führungswagen und an dem Behandlungselemententräger vorgesehen sein, um den Behandlungselemententräger und damit die Schienenbehandlungselemente ohne langwierige Nachjustierung in der für die Schienenbehandlung richtigen Position an dem Führungswagen zu befestigen.

Der Behandlungselemententräger kann als ein im wesentlichen planparalleler Flachkörper ausgebildet werden, so daß die Länge des Führungswagens in Achsrichtung nur möglichst wenig gegenüber der notwendigen Führungslänge verlängert wird und damit der verfügbare Hub des Führungswagens längs der Führungsschiene möglichst groß bleibt. Insbesondere kann der Behandlungselemententräger als ein Gehäuse, bevorzugt als ein Flachgehäuse ausgebildet werden, wobei innerhalb dieses Gehäuses die Führungsmittel für das mindestens eine Schienenbehandlungselement untergebracht werden können. Auf diese Weise ergibt sich eine formschöne Gestaltung des mit dem Behandlungselemententräger und den Behandlungselementen zusammengebauten Führungswagens. Dieser Führungswagen ist berührungsfreundlich dadurch, daß die Behandlungselemente nur insoweit aus dem Gehäuse heraustreten, als dies eben zur Behandlung der Führungsschiene unbedingt erforderlich ist. Der Führungswagen mit den angebauten Behandlungselementen kann dann auch leicht gereinigt werden.

Für die Montage und für die Abdeckung der Behandlungselemente ist es besonders vorteilhaft, wenn der Behandlungselemententräger aus zwei sandwichartig aneinander anliegenden Trägerteilen zusammengesetzt ist. Man kann die Führungsmittel für die Schienenbehandlungselemente im Bereich von Berührungsflächen der sandwichartig aneinander anliegenden Trägerteile anordnen, insbesondere in der Weise, daß das mindestens eine Schienenbehandlungselement und vorteilhafterweise auch die ihm zugehörigen Vorspannmittel nach Einlegen in die Führungsmittel des einen Trägerteils verlustsicher gehalten werden, indem die Berührungsflächen der beiden Trägerteile aneinander angelegt und gegeneinander befestigt werden. Die beiden Trägerteile können dabei durch Verschweißen, insbesondere Ultraschallverschweißen, oder durch Verkleben oder durch Verschrauben oder durch Verrasten miteinander verbunden werden.

Der Führungswagen kann entsprechend einer im Stand der Technik häufig angewandten Bauform im wesentlichen U-förmig ausgebildet sein (unter Zugrundelegung einer Betrachtungsrichtung in Längsrichtung der Achse der Führungsschiene), wobei der Führungswagen mit einem Stegbereich einer Kopffläche der Führungsschiene nahe liegt und mit je einem Schenkelbereich jeweils einer Seitenfläche der Führungsschiene nahe liegt. An der Führungsschiene bleibt dann eine der Kopffläche gegenüberliegende Fußfläche frei, mit welcher die Führungsschiene auf einem Träger befestigt werden kann, z.B. durch Schrauben, welche in Abständen längs der Führungsschiene angebracht werden, die Führungsschiene auf ihrer ganzen Höhe durchsetzen und in den Träger eingeschraubt sind. Bei einer solchen Anordnung ist der U-förmige Führungswagen häufig durch je ein Rollmittelsystem geführt, welches zwischen den beiden Schenkelbereichen und der jeweils zugehörigen Seitenfläche der Führungsschiene angebracht ist. Die Rollmittelsysteme können dabei an dem Führungswagen befestigt werden. Beispielsweise können die Rollmittelsysteme von an dem Führungswagen einzeln gelagerten Rollen gebildet sein, welche an ihren Umfangsflächen mit Laufbahnen der Führungsschiene in rollendem Eingriff stehen. Ebenso ist es möglich, daß die Rollmittelsysteme von an dem Führungswagen geführten endlosen Wälzkörperreihen gebildet sind. Die Wälzkörperreihen können dabei von Kugeln gebildet sein, wie z.B. aus der DE-OS 36 20 571 bekannt. Die Wälzkörperreihen können aber auch von Rollen oder Nadeln gebildet sein. Im Falle einer U-förmigen Gestalt des Führungswagens können in jedem Schenkelbereich zwei oder mehr endlose Wälzkörperreihen vorgesehen sein, wie z.B. aus der DE-OS 36 20 571 bekannt. In diesem Fall liegt der jeweilige Behandlungselemententräger - gewünschtenfalls als gesonderte vormontierte Baugruppe - an der jeweiligen mit Kugelumlenkungen versehenen Endplatte des Führungswagens an.

Das Schienenbehandlungselement kann, wie schon weiter oben angedeutet, ein poröser Körper sein, welcher Schmiermittel auf Laufbahnen anbringt. Ein solcher schmiermittelauftragender Körper kann gleichzeitig auch eine Funktion als Abstreifelement übernehmen, um etwaigen Schmutz von der Führungsschiene und insbesondere von deren Laufbahnen fernzuhalten und das Eindringen von Schmutz, z.B. Spänen, in den Bereich der Rollmittelsystemezu unterdrücken.

Bei U-förmiger Ausführung des Führungswagens wird empfohlen, den Behandlungselemententräger ebenfalls U-förmig auszubilden mit einem einer Kopffläche der Führungsschiene gegenüberliegenden Stegteil und mit Seitenflächender Führungsschiene gegenüberliegenden Schenkelteilen. Dann kann in jedem der Schenkelteile jeweils ein Schienenbehandlungselement zum Eingriff mit der jeweils zugehörigen Seitenfläche der Schiene vorgesehen sein, insbesondere jeweils im Laufbahnbereich.

Insbesondere im Hinblick auf das Fernhalten von Schmutz von den Rollmittelsystemen wird empfohlen, daß an zwei in Achsrichtung voneinander abgelegenen Stirnflächen des Führungswagens je ein Behandlungselemententräger angebracht ist.

Das Behandlungselement kann auch als Schabelement ausgebildet sein. Es hat sich nämlich gezeigt, daß sich an den Führungsschienen häufig Schmutzteile fest anhaftend festsetzen, insbesondere bei Werkzeugmaschinen, bei denen heiße Späne in den Bereich der Führungsschiene gelangen können, wobei diese heißen Späne insbesondere in Verbindung mit an der Führungsschiene haftendem Schmiermittel an der Führungsschiene festbacken.

Da die Gefahr des Anhaftens solcher Verunreinigungen, wie Späne, auch außerhalb des Laufbahnbereichs besteht, kann es vorteilhaft sein, wenn das mindestens eine Schienenbehandlungselement - bei Betrachtung des Führungsschienenprofils in Achsrichtung der Führungsschiene - über eine zugehörige Laufbahn hinaus in Behandlungseinwirkung mit der Führungsschiene steht. Insbesondere ist auch daran gedacht, daß das gesamte Profil der Führungsschiene, soweit diese nicht an einem Träger anliegt, der Einwirkung von Schienenbehandlungselementen ausgesetzt wird, zumindest aber derjenige Profilbereich, welcher der Überdeckung der Führungsschiene durch den Führungswagen entspricht.

Nach einer Weiterbildung der Erfindung ist vorgesehen, daß sich die Anlagekanten mindestens zweier in Profilumfangsrichtung aufeinander folgender Schienenbehandlungselemente gegenseitig überlappen. Auf diese Weise wird es möglich, die gesamte wirksame Oberfläche einer Führungsschiene stets von Schmutzteilen, wie Spänen, freizuhalten und das Eindringen solcher Schmutzteile in den Bereich der Rollmittelsysteme zu unterdrücken. Bei U-förmiger Ausführung des Führungswagens mit einem einer Kopffläche der Führungschiene gegenüberliegenden Stegbereich und zwei je einer Seitenfläche der Führungsschiene gegenüberliegenden Schenkelbereichen kannjedem der Schenkelbereiche ein Schienenbehandlungselement für eine Seitenfläche der Führungsschiene zugeordnet werden, und außerdem kann dem Stegbereich ein Schienenbehandlungselement für die Behandlung der Kopffläche der Führungsschiene zugeordnet werden. Dann kann man eine Vollerfassung des Profils durch die Behandlungselemente dadurch erreichen, daß sich die beiden, den Seitenflächen zugeordneten Schienenbehandlungselemente in Profilumlaufrichtung mit dem der Kopffläche zugeordneten Schienenbehandlungselement überlappen.

Die Unterbringung eines Schienenbehandlungselements oder mehrerer Schienenbehandlungselemente in einem Behandlungselemententräger läßt sich bei sandwichartiger Zusammensetzung des Behandlungselemententrägers aus zwei Trägerteilen mit zur Achse der Führungsschiene orthogonalen Berührungsflächen besonders leicht ausführen. Man kann in dem einen der Trägerteile in seiner Berührungsfläche reliefartig eine Führungsausnehmung für das mindestens eine Schienenbehandlungselement ausbilden und diese Führungsausnehmung durch den jeweils anderen Trägerteil schließen, der mit dem erstgenannten Trägerteil fest verbunden wird. Die Führungsausnehmung kann dabei durch eine zur Achse der Führungsschiene orthogonale Hauptfläche und je zwei zueinander parallele Randflächen gebildet werden, wobei dann eine weitere Hauptfläche von dem jeweils anderen Trägerteil gebildet wird.

Um das bzw. die Behandlungselemente gegen Verlust zu sichern, können Sicherungsmittel besonders leicht im Bereich der Hauptflächen und der diesen anliegenden Flächen des jeweiligen Behandlungselements vorgesehen werden. Diese Verlustsicherungsmittel können z.B. als Bolzen-Langloch-Kombinationen ausgeführt werden. Die Verlustsicherungsmittel können beispielsweise von einem Langloch des jeweiligen Schienenbehandlungselements und einem Langloch-Eingriffsbolzen an einem Trägerteil gebildet sein, wobei der Langloch-Eingriffsbolzen vorzugsweise einstückig an dem jeweiligen Trägerteil ausgebildet wird. Eine solche einstückige Herstellung des Langloch-Eingriffsbolzens mit dem jeweiligen Trägerteil wird besonders einfach, wenn der Trägerteil aus Kunststoff gegossen oder gespritzt wird oder aus Metall im Druckgußverfahren, hergestellt wird.

Die Führungsausnehmungen können auch zur Aufnahme der Vorspannmittel verwendet werden, welche das jeweilige Behandlungselement in Eingriff mit der Führungsschiene halten. Auf diese Weise werden auch die Vorspannmittel abgedeckt, vor Verlust gesichert, vor Verschmutzen gesichert, der Berührung durch menschliche Hände entzogen und formschön untergebracht.

Die Vorspannmittel können von Schraubendruckfedern gebildet sein. Nach einer bevorzugten Ausführungsform ist vorgesehen, daß die Vorspannmittel zum Vorspannen des Schienenbehandlungselements einen zumindest an seiner Oberfläche aus elastomerem Werkstoff bestehenden Vorspannkörper umfassen, welcher durch die Wirkung von Anschlagmitteln oder durch das Anliegen des Schienenbehandlungselements an der Führungsschiene zwischen einer Widerlagerfläche an dem Führungswagen und einer Angriffsfläche des Schienenbehandlungselements unter elastischer Verformung des elastomeren Werkstoffs eingespannt ist. Nach einer bevorzugten Ausführungsform ist dabei vorgesehen, daß der Vorspannkörper von einem Rundscheibenkörper gebildet ist, welcher auf seiner Umfangsfläche einen Elastomerring trägt und mit seiner Achse parallel zur Achse der Führungsschiene liegt. Der Elastomerring kann dabei nach einer besonders einfachen Ausführungsform als ein O-Ring ausgebildet sein.

Wenn das mindestens eine Schienenbehandlungselement in einer zur Achse der Führungsschiene im wesentlichen orthogonalen scheibenförmigen Führungskammer geführt ist, so kann man in dieser Führungskammer zwischen einer schienenfernen Endfläche des Schienenbehandlungselements und einer dieser schienenfernen Endfläche gegenüberliegenden Begrenzungsfläche der scheibenförmigen Führungskammer mindestens einen Vorspannkörper einlegen, welcher zwischen zwei Hauptflächen der scheibenförmigen Führungskammer geführt ist und durch eine Ausnehmung in der schienenfernen Endfläche des Schienenbehandlungselements oder/und der Begrenzungsfläche in der scheibenförmigen Führungskammer in Arbeitsposition gesichert ist.

Um mehrere Schienenbehandlungselemente ohne Unterbrechung an dem Profil der Führungsschiene zur Anlage bringen zu können, wird weiter vorgeschlagen, daß das Schienenbehandlungselement scheibenförmig ausgebildet und im wesentlichen orthogonal zur Achse der Führungsschiene angeordnet ist und an einem der Führungsschiene nahen Rand eine Schabkante aufweist, welche in Achsrichtung der Führungsschiene gegenüber dem Führungswagen im wesentlichen starr ist. Bei einer solchen Ausbildung läßt sich die oben bereits angesprochene Überlappung der Schabekanten leicht erreichen.

Die Schabkante wird bevorzugt im Bereich einer von dem Führungswagen fernen Endfläche des scheibenförmigen Schienenbehandlungselements angeordnet.

Gleichwohl ist es möglich, angrenzend an die Schabkante eine von dem Laufwagen weg weisende Schaufelfläche an dem Schienenbehandlungselement auszubilden.

Die Schaufelfläche kann dabei an einem von dem Führungswagen weg weisenden Vorsprung des scheibenförmigen Schienenbehandlungselements ausgebildet sein. Bevorzugt vermeidet man allerdings einen solchen Vorsprung, um möglichst problemlos die Überlappung zweier einander in Profilumlaufrichtung benachbarter scheibenförmiger Schienenbehandlungselemente zu erreichen.

Man kann ohne wesentliche Vergrößerung des axialen Raumbedarfs für die Schienenbehandlungselemente an diesen, den Schabekanten benachbarten Schaufelflächen dadurch anformen, daß man eine Einkerbung in dem Schienenbehandlungselement vorsieht.

Grundsätzlich ist eine elastische Beweglichkeit der Schabekante gegenüber dem jeweiligen Schienenbehandlungselement nicht erforderlich, weil man ohnehin Vorspannmittel vorsieht, um das Schienenbehandlungselement und damit auch seine Schabekante gegen die Schiene anzupressen. Man kann aber u.U. zu einer verbesserten Anschmiegung der Schabekante an den Verlauf des Schienenprofils dadurch gelangen, daß man die Schabekante in zur Achsrichtung der Führungsschiene orthogonaler Richtung elastisch auslenkbar macht gegenüber der Scheibenstruktur des Schienenbehandlungselements, dem die Schabekante zugehört.

Die Überlappung von in Profilumlaufrichtung aufeinander folgenden Schienenbehandlungselementen im Bereich ihrer jeweiligen Schabekante läßt sich bei geringem axialem Raumbedarf für die Schienenbehandlungselemente auf einfache Weise dadurch erzielen, daß man von zwei einander in Profilumlaufrichtung der Führungsschiene überlappenden Schienenbehandlungselementen das eine mit einer Randaussparung versieht, welche von dem jeweils anderen teilweise ausgefüllt ist.

Der Behandlungselemententräger kann von mindestens einem aus Kunststoff gegossenen oder gespritzten Formteil gebildet sein. Andererseits kann das mindestens eine Schienenbehandlungselement aus Metall, wie Stahl, Messing, Metallguß, oder ebenfalls aus polymerem Werkstoff hergestellt sein. Dabei wird man die Härte des Schienenbehandlungselements entsprechend der jeweiligend Schabeaufgabe zu bestimmen haben.

Die Führungsschiene kann an mindestens einer Seitenfläche mit einer im Querschnitt trapezförmigen Profilvertiefung ausgeführt sein, so daß die Flanken dieser Profilvertiefung Laufbahnen für je einen endlosen Rollenumlauf bilden. Dann kann man an dem zugehörigen Schienenbehandlungselement einen entsprechend trapezförmigen Vorsprung ausbilden, dessen Flanken zum Zusammenwirken mit diesen Laufbahnen bestimmt sind.

Um den Führungswagen auf die Führungsschiene leicht aufbringen zu können, insbesondere wenn der Führungswagen an beiden Enden Schienenbehandlungselemente aufweist, wird weiter vorgeschlagen, daß der Führungswagen mit lösbaren Haltemitteln ausgeführt ist, welche das Schienenbehandlungselement oder die Schienenbehandlungselemente vor dem Aufbringen des Führungswagens auf die Führungsschiene in einer unwirksamen Stellung halten, d.h. in einer Stellung, in welcher das Schienenbehandlungselement bei positionsgerechter Annäherung des Führungswagens an ein Ende der Führungsschiene in Richtung der Achse der Führungsschiene außer Eingriff mit der Führungsschiene bleibt. Man kann dann den Führungswagen ungestört durch das oder die mehreren Schienenbehandlungselemente auf den jeweils verfügbaren Endabschnitt der Führungsschiene ungestört aufschieben und erst nach dem Aufschieben die Positionierungsmittel lösen, lockern, abnehmen oder zerstören, so daß erst dann die Schienenbehandlungselemente mit ihren Schabekanten gegen den jeweils zugehörigen Profilabschnitt der Führungsschiene zur Anlage kommen.

Insbesondere ist es auch möglich, daß diese lösbaren Positionierungsmittel bei Vorhandensein eines Behandlungselemententrägers zwischen diesem Behandlungselemententräger und den Behandlungselementen vorgesehen sind.

Es ist möglich, daß an dem als Schmierelemententräger ausgebildeten Behandlungselemententräger eine innere Umfangskontur, d.h. eine der Führungsschiene zugekehrte Umfangskontur, angeordnet ist, welche - gewünschtenfalls über eine Dichtung - an der Führungsschiene anliegt und als Abstreifvorrichtung wirkt. Durch diese Maßnahme wird eine schmierende und abstreifende Behandlung der Schiene möglich, wobei das Laufbahnschmierelement und die Abstreifvorrichtung zu einer kompakten vormontierten Baugruppe zusammengefaßt sein können, welche leicht an dem Führungswagen angebracht werden kann. Dabei ist insbesondere an eine Lösung gedacht in der Weise, daß die Abstreifvorrichtung derart ausgebildet ist, daß sie einerseits das Eindringen von Schmutzteilchen zwischen Führungswagen und Führungsschiene verhindert und andererseits die Schmiermitteldosage der Laufbahnen im wesentlichen auf die jeweilige axiale Länge des Führungswagens beschränkt.

Die beiliegenden Figuren erläutern die Erfindung anhand eines Ausführungsbeispiels; es stellen dar:
- Fig. 1: eine Übersicht über eine erfindungsgemäße Linearführungseinrichtung;
- Fig. 2: eine Ansicht auf eine Teilplatte eines plattenförmigen Schmierelemententrägers nach der Erfindung;
- Fig. 3: einen Schnitt nach Linie III-III der Fig. 2;
- Fig. 4: eine Endansicht, teilweise einen Schnitt, einer weiteren erfindungsgemäßen Linearführungseinrichtung mit einer Schienenbehandlungseinheit;
- Fig. 5: eine Endansicht einer Schienenbehandlungseinheit, teilweise geöffnet;
- Fig. 6: eine Ansicht auf einen Behandlungselemententräger der Schienenbehandlungseinheit;
- Fig. 7: einen Schnitt nach Linie VII-VII der Fig. 6;
- Fig. 8: einen Schnitt nach Linie VIII-VIII der Fig. 6;
- Fig. 9: einen Schnitt durch den Behandlungselemententräger entsprechend Linie VII-VII der Fig. 6, wobei in den Behandlungselemententräger Schienenbehandlungselemente eingesetzt sind;
- Fig. 10: einen Schnitt nach Linie VIII-VIII der Fig. 6, wobei in den Behandlungselemententräger die Schienenbehandlungselemente eingesetzt sind;
- Fig. 11: eine Ansicht eines Deckels für den Behandlungselemententräger gemäß Fig. 6;
- Fig. 12: einen Schnitt nach Linie XII-XII der Fig. 11;
- Fig. 13: eine Ansicht der Schienenbehandlungselmente für die Seitenflächen der Führungsschiene;
- Fig. 14: eine Ansicht in Pfeilrichtung XIV der Fig. 13;
- Fig. 15: eine Ansicht eines Schienenbehandlungselements für die Kopffläche der Führungsschiene;
- Fig. 16: eine Ansicht in Pfeilrichtung XVI der Fig. 15;
- Fig. 17: die Ansicht eines Vorspannelements für die Schienenbehandlungselemente und
- Fig. 18a - 18e: verschiedene Schabekantengestaltungen an Schienenbehandlungselementen.

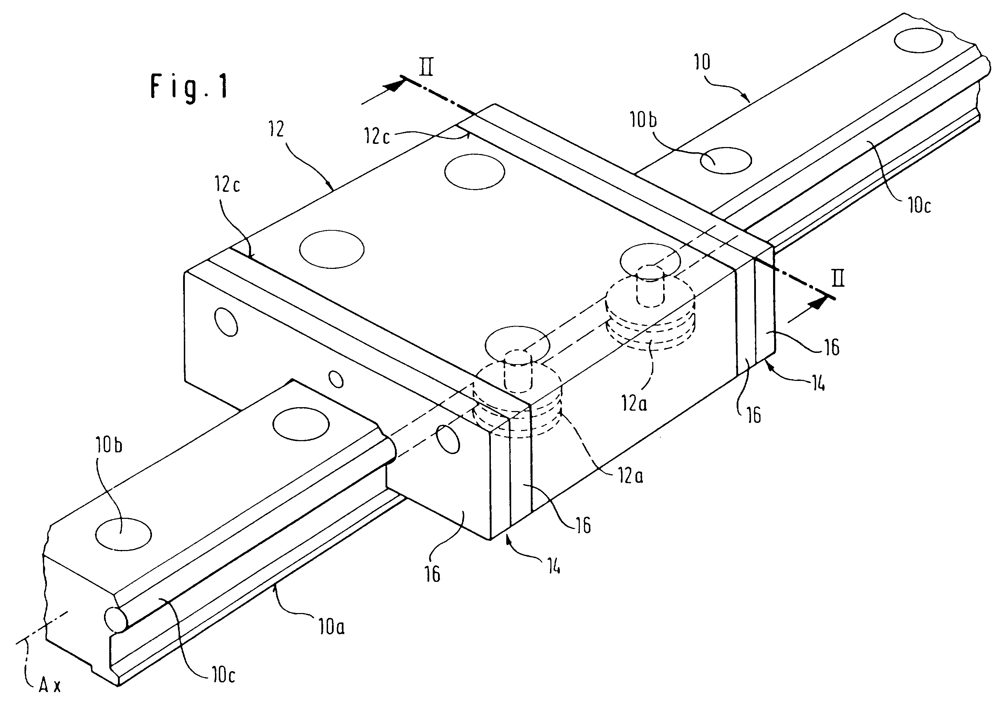

In Fig. 1 ist eine Führungsschiene ganz allgemein mit 10 bezeichnet. Die Achse dieser Führungsschiene ist mit Ax bezeichnet. Die Unterseite der Führungsschiene ist mit 10a bezeichnet und ist dazu bestimmt, auf einem Fundament oder sonstigem Träger befestigt zu werden und zwar mittels Befestigungsbolzen, die durch die Führungsschiene 10 in vertikaler Richtung durchsetzende abgestufte Bohrungen 10b hindurch in dem Fundament oder Sockel verschraubt werden. An der Führungsschiene 10 sind beidseits Rundprofilstangen 10c angebracht, von denen nur eine zu erkennen ist, während die andere symmetrisch zu einer die Achse Ax enthaltenden vertikalen Mittelebene an der Rückseite angebracht ist. Auf der Führungsschiene 10 ist ein Führungswagen 12 in Achsrichtung Ax verschiebbar geführt. An dem Führungswagen sind Führungsrollen 12a gelagert, von denen nur eine vordere Gruppe erkennbar ist, während eine entsprechende hintere Gruppe mit der nicht dargestellten rückwärtigen Rundprofilstange 10c in Eingriff steht. An den achsnormalen Endflächen 12c des Führungswagens 12 ist je ein plattenförmiger Schmierelemententräger 14 befestigt. Die Schmierelemententräger sind identisch, so daß die Beschreibung nur eines von ihnen genügt.

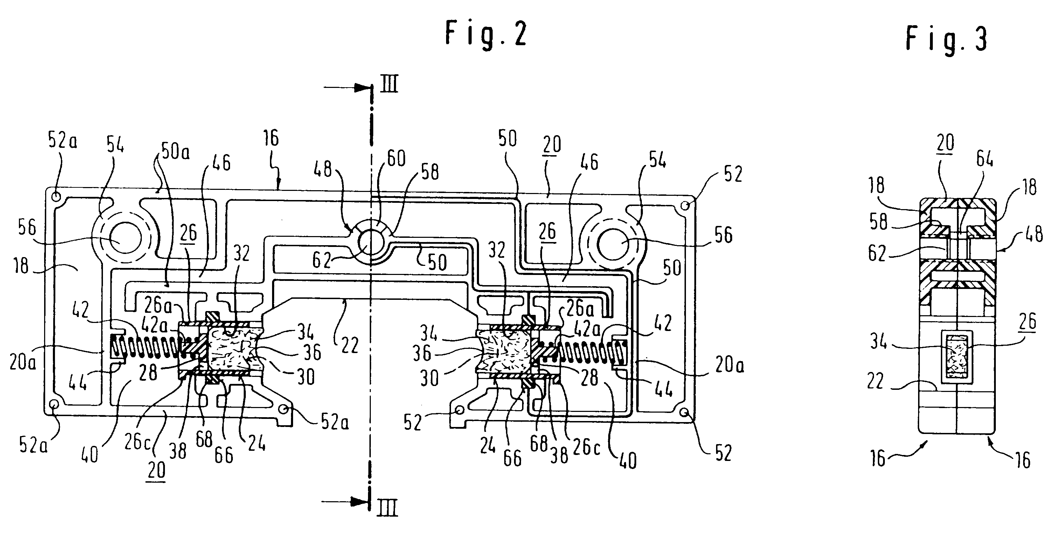

Jeder Schmierelemententräger 14 ist aus zwei plattenförmigen Teilen 16 zusammengesetzt, von denen einer in Fig. 2 dargestellt ist. Die Teilplatte 16 gemäß Fig. 2 besteht aus einer Außenwand 18 und einem System von sich über dieser Außenwand erhebenden Rippen 20. Die Außenwand 18 schließt eine Innenkontur 22 ein, die der Außenkontur der Führungsschiene 10 annähernd angepaßt ist.

Vorab sei nun darauf hingewiesen, daß zwei identische plattenförmige Teile 16, wie in Fig. 2 dargestellt, jeweils einen Schmierelemententräger bilden, wobei Rippensystem 20 gegen Rippensystem 20 stößt, so daß zwischen den einander mit Abstand gegenüberliegenden Außenwänden 18 Hohlräume gebildet sind.

Die beiden Platten zusammen definieren rechteckige Führungen 24 für Schmierelementenfassungen 26. Diese Schmierelementenfassungen 26 besitzen jeweils einen den Führungen 24 komplementären Mantel 26a. Diese Schmierelementenfassungen sind in der Mitte ihrer Führungslänge durch jeweils eine Stützplatte 28 unterteilt. Die Stützplatten 28 sind einstückig mit dem Mantel 26a hergestellt. Angrenzend an eine Endöffnung 30, welche im Anbauzustand zur Führungsschiene 10 hinweist, ist innerhalb jedes Mantels eine Aufnahmekammer 32 ausgebildet, welche ein Laufbahnschmierelement 34 aus Filz aufnimmt. Das Laufbahnschmierelement 34 besitzt an seinem der Laufbahn 10c zugekehrten, über den Mantel 26a überstehenden Ende eine Kontur 36, welche der Kontur der jeweiligen Rundprofilstange 10c angepaßt ist. Die Stützplatte 28 weist Durchbrechungen 38 auf, welche die Aufnahmekammer 32 mit einer Schmiermittelvorratskammer 40 verbinden. Die Schmiermittelvorratskammer ist mit einem flüssigen Schmiermittel gefüllt. Das Laufbahnschmierelement 34 füllt den Querschnitt der Aufnahmekammer 32 im wesentlichen vollständig aus, so daß der freie Durchfluß durch die Aufnahmekammer 32 für das Schmiermittel versperrt ist und Schmiermittel aus der Vorratskammer 40 nur nach Permeation durch das jeweilige Filzteil an die Oberfläche der Kreisprofilstange 10c gelangen kann.

Die Schmierelementenfassung 26 ist durch eine Schraubendruckfeder 42 in Richtung auf die Führungsschiene 10 vorgespannt. Die Schraubendruckfeder 42 stützt sich dabei an einer Stützfassung 44 im Bereich einer Rippe 20a an dem Schmierelemententräger 14 ab und wirkt andererseits auf die Stützplatte 28 ein, die zur Zentrierung der Schraubendruckfeder 42 mit einem Zentrierzapfen 42a ausgebildet ist. Auf diese Weise wird durch die Schraubendruckfeder 42 die Schmierelementenfassung 26 in Richtung auf die Führungsschiene 10 gedrückt und das in Richtung auf die Führungsschiene vorstehende Ende des Laufbahnschmierelements legt sich mit der Profilkontur 36 an die kreisförmige Rundprofilstange 10c an. Die Vorratskammern 40 zu beiden Seiten der Innenprofilkontur 22 sind über Schmiermittelversorgungskanäle 46 an eine Schmiermittelzuflußstelle 48 angeschlossen, die im einzelnen aus Fig. 3 zu ersehen ist.

Man erkennt, daß in der rechten Hälfte der Fig. 2 auf den Rippen des Rippensystems Schweißraupen 50 angeformt sind, die in der linken Hälfte der Darstellung von Fig. 2 fehlen. Denkt man sich zwei plattenförmige Teile 16 gemäß Fig. 2 jeweils mit dem Rippensystem 20 übereinandergelegt zu einem Sandwichgebilde wie es in Fig. 1 an der jeweiligen Stirnfläche 12c vorgesehen ist, so liegen die Schweißraupen 50 des einen plattenförmigen Teils 16 an stumpfen Rippenkopfflächen 50a des jeweils anderen plattenförmigen Teils an.

In diesen Anlagenbereichen kann dann leicht eine Verschweißung zwischen den beiden plattenförmigen Teilen 16 vorgenommen werden. Zur Vorbereitung der Schweißung dienen Positionierungszapfen 52 in der jeweils einen Hälfte der plattenförmigen Teile und Zapfenaufnahmelöcher 52a in der jeweils anderen Hälfte der plattenförmigen Teile. Dabei muß man sich wieder das Übereinanderliegen der zwei plattenförmigen Teile 16 mit Rippensystem gegen Rippensystem vorstellen. Dann greifen die Zapfen 52 des einen Teils in die Löcher 52a des anderen Teils und umgekehrt ein. An den Außenwänden 18 sind ferner Rundrippen 54 des Rippensystems angeformt, deren Höhe der Höhe des jeweils übrigen Rippensystems 20 entspricht, so daß diese Rundrippen 54 beim Vereinigen der beiden plattenförmigen Teile 16 aneinander zu liegen kommen und ebenfalls miteinander verschweißt werden. Auf diese Weise erhält man Befestigungsöffnungen 56, mittels welcher der hohlkastenförmige Schmierelemententräger 14 an der jeweiligen Stirnfläche 12c des Führungswagens 12 durch Schraubbolzen oder dergleichen befestigt werden kann. Der Schmiermittelanschluß 48 ist durch Ringrippen 58 an den beiden plattenförmigen Teilkörpern 16 gebildet, die ebenfalls aneinander anliegen und miteinander verschweißt werden. Jede dieser Ringrippen besitzt eine axiale Einkerbung 60. Diese Einkerbungen 60 bilden zusammen eine Verbindung 64 (siehe Fig. 3) von der Durchgangsöffnung 62 des Schmiermittelanschlusses 48 zu dem Schmiermittelversorgungskanal 46, der die Schmiermittelvorratskammern 40 mit dem Schmiermittelanschluß 48 verbindet. Die Durchgangsöffnung 62 kann einendig verschlossen und anderenendig mit einem Nippel in Form eines Rückschlagventils verbunden sein, der ein Einpressen von Schmiermittel gestattet, einen Ausfluß aber verhindert.

Nachzutragen ist noch, daß dann, wenn nicht bereits durch die Anlage zwischen der Führung 24 und der Schmierelementenfassung 26 eine unter Berücksichtigung des zur Anwendung kommenden Schmiermittels ausreichende Dichtung besteht, in der Innenumfangsfläche der Führung 24 eine Ringnut 66 eingelassen sein kann. Von dieser Ringnut 66 ist jeweils eine Hälfte in jedem der beiden plattenförmigen Teile 16 vorgesehen. Die Ringnut 66 nimmt einen Dichtring 68 auf.

Weiter ist noch nachzutragen, daß das Fassungsgehäuse 26 jeweils an seinem führungsschienenfernen Ende einen Anschlag 26c besitzt, der nach dem Abziehen des Führungswagens 12 von der Führungsschiene 10 oder nach dem Abnehmen des Schmierelemententrägers 14 von dem Führungswagen 12 ein vollständiges Ausschieben des Führungsgehäuses 26 aus der Führung 24 verhindert und damit die Fassung 26 unverlierbar mit dem Schmierelemententräger 14 verbindet. Weiterhin ist das Laufbahnschmierelement 34 innerhalb des Fassungsgehäuses 26 in so straffem Sitz aufgenommen, daß es ebenfalls unverlierbar ist.

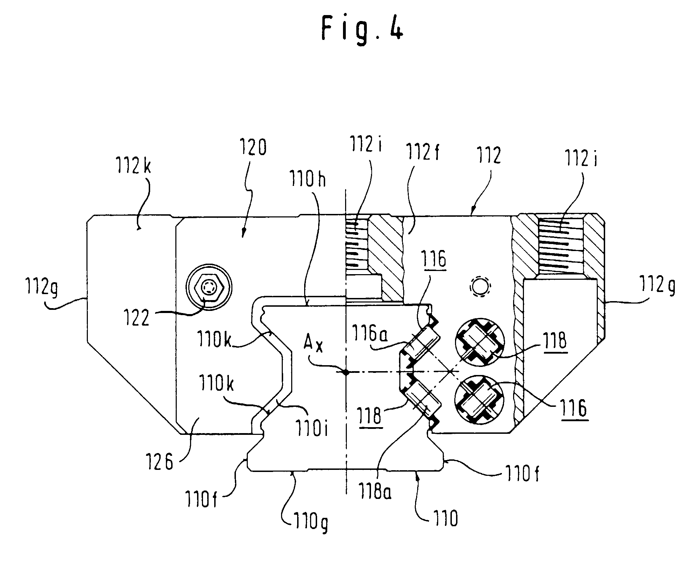

In Fig. 4 ist eine Führungsschiene mit 110 bezeichnet und ein auf dieser Führungsschiene geführter Führungswagen mit 112. Die Führungsschiene 110 weist zwei Seitenflächen 110f, eine Bodenfläche 110g und eine Kopffläche 110h auf. Jede der Seitenflächen 110f ist mit einer Trapeznut 110i versehen. Die Flanken dieser Trapeznut 110i sind mit 110k bezeichnet; diese Flanken bilden Laufbahnen für Rollenreihen.

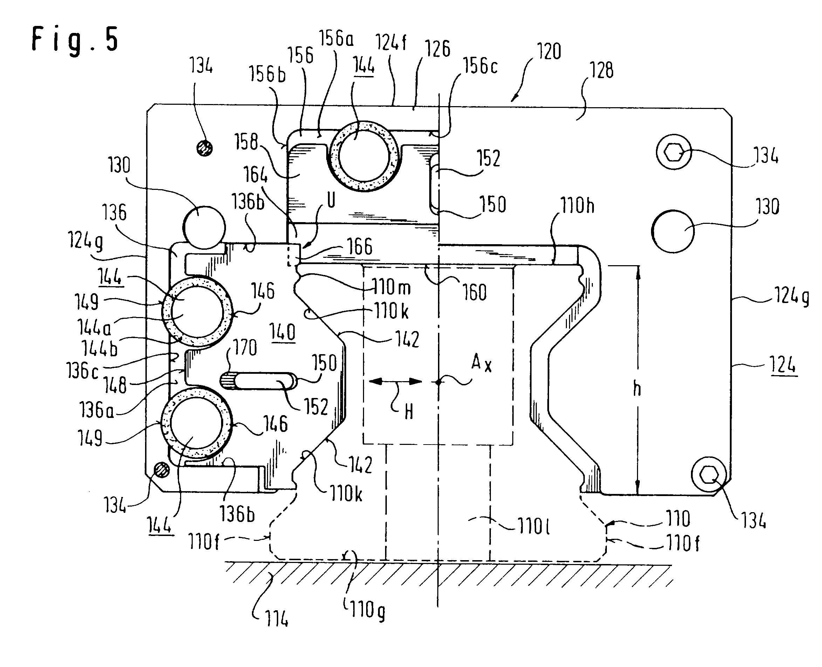

Die Führungsschiene 110 wird, wie aus Fig. 5 zu ersehen, mit ihrer Bodenfläche 110g auf einem Träger 114 befestigt und ist zu diesem Zwecke in Abständen längs ihrer Achse Aₓ mit Bohrungen 1101 zur Aufnahme von Befestigungsbolzen versehen.

Der Führungswagen 112 ist, wie aus Fig. 4 und 5 ersichtlich, mit einem Stegbereich 112f und Schenkelbereichen 112g ausgeführt. Der Stegbereich 112f liegt der Kopffläche 110h gegenüber, während die Schenkelbereiche 112g den Seitenflächen 110f gegenüberstehen. Der Führungswagen 112 ist an der Führungsschiene durch Rollenschleifen 116 und 118 geführt. Die lastübertragenden Rollenreihen 116a und 118a dieser Rollenschleifen 116,118 sind einerseits an den von den Flanken 110k gebildeten Laufbahnen und andererseits an Laufbahnen des Führungswagens 112 geführt. An dem Führungswagen 112 sind Befestigungsbohrungen 112i angebracht. In diesen Befestigungsbohrungen 112i kann ein Objekt an dem Führungswagen 112 befestigt werden, beispielsweise ein Werkzeugmaschinentisch.

Man erkennt in der linken Hälfte der Fig. 4 an der Stirnfläche 112k des Führungswagens 112 befestigt eine Schienenbehandlungseinheit 120. Die Befestigung der Schienenbehandlungseinheit 120 an der Stirnfläche des Führungswagens 112 erfolgt durch Befestigungsschrauben 122.

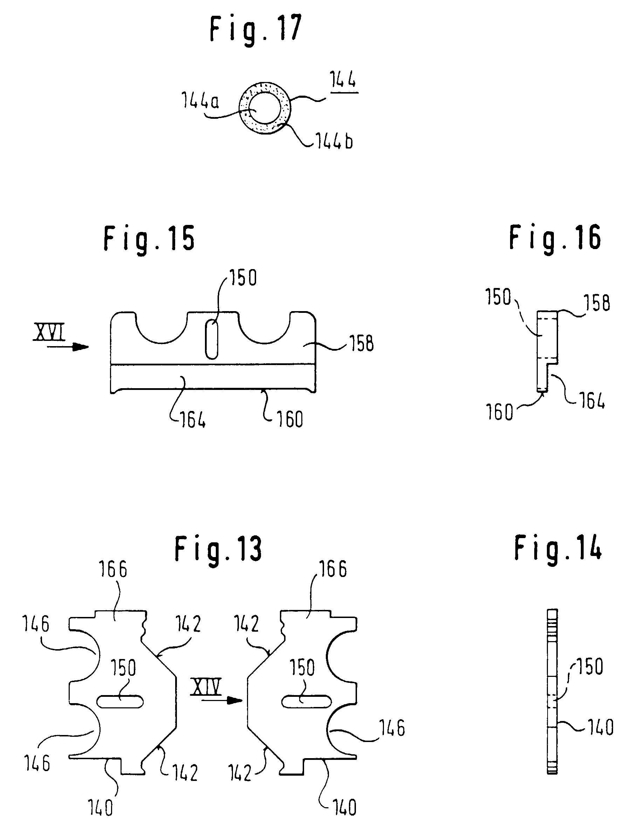

Einzelheiten der Schienenbehandlungseinheit 120 sind aus den Fig. 5 - 17 zu ersehen.

In Fig. 5 erkennt man einen Behandlungselemententräger 124, welcher aus einer Trägerplatte 126 und einem Deckel 128 zusammengesetzt ist. Trägerplatte und Deckel 126 und 128 werden von Befestigungsbohrungen 130 durchsetzt, durch welche hindurch die Bolzen 122 zur Befestigung des Behandlungselemententrägers 124 in den Führungswagen eingeschraubt werden. Der Deckel 128 ist an der Trägerplatte 126 durch Befestigungsschrauben 134 befestigt.

Der Behandlungselemententräger 124 weist einen Stegteil 124f und Schenkelteile 124g auf, die dem Stegbereich 112f und den Schenkelbereichen 112g des Führungswagens gemäß Fig. 4 zugeordnet sind.

In der Trägerplatte 126 sind in jedem der Schenkelteile 124g scheibenförmige Führungskammern 136 reliefartig versenkt ausgebildet. Diese Führungskammer 136 sind mit einer Hauptfläche 136a orthogonal zur Achse Aₓ und mit Randflächen 136b und 136c ausgeführt. Außerdem sind die scheibenförmigen Führungskammern 136 durch den Deckel 128 abgedeckt. In den scheibenförmigen Führungskammern 136 sind scheibenförmige Behandlungselemente 140 geführt, und zwar durch die Hauptfläche 136a, den Deckel 128 und die Randflächen 136b. Die scheibenförmigen Schienenbehandlungselemente 140 weisen Schabekanten 142 auf, die zum Beschaben der Laufbahnen 110k bestimmt und ausgebildet sind. Die Schabekanten 142 werden durch Vorspannkörper 144 gegen die Laufbahnen 110k angedrückt. Die Vorspannkörper 144 bestehen aus Kunststoffscheiben von kreiszylindrischem Umriß. In die Umfangsflächen der Kunststoffscheiben 144a sind elastisch komprimierbare O-Ringe 144b aus elastomerem Material, z.B. Naturkautschuk eingelegt. Die Kunststoffscheiben 144a liegen an der Hauptfläche 136a und an dem Deckel 128 frei beweglich an. In dem Behandlungselement 140 sind angrenzend an dessen schienenferne Kante 148 halbkreisförmige Aussparungen 146 ausgebildet, welche die Vorspannkörper 144 lose aufnehmen und positionieren. Ferner sind zur Positionierung der Vorspannkörper 144 in der Randfläche 136c der scheibenförmigen Führungskammer segmentförmige Mulden 149 gebildet. Wenn der Führungswagen 112 auf der Führungsschiene 110 angebracht ist, so pressen die Vorspannkörper 144 das Schienenbehandlungselement 140 mit seinen Schabekanten 142 gegen die Laufbahnen 110k der Führungsschiene 110 an. Dabei sind die O-Ringe 144b elastisch komprimiert zwischen den Aussparungen 146 und den Mulden 149 aufgenommen. Man erkennt, daß die Schabekanten 142 dem Profilverlauf der Seitenfläche 110f der Führungsschiene 110 genau angepaßt sind, auch insoweit, als die Führungsschiene Feinstrukturen, z.B. bei 110m, aufweist. Die Feinstruktur bei 110m kann dazu bestimmt sein, von einem Abdeckblech der Kopffläche 110b umgriffen zu werden, welches die ganze Kopffläche 110h abdeckt, um auch im Bereich der Befestigungsbohrungen 1101 eine einheitliche Oberflächenstruktur der Kopffläche 110a zu liefern. Man erkennt weiter, daß die Führungsschiene 110 im gesamten Höhenbereich h, in dem die Führungsschiene von dem Führungswagen 112 übergriffen wird, mit den Schabekanten 142 des Schienenbehandlungselements 140 in Eingriff steht.

Wenn der Führungswagen 112 von der Führungsschiene 110 getrennt ist, so soll das Schienenbehandlungselement 140 aus der scheibenförmigen Führungskammer 136 nicht austreten. Um das Austreten des Behandlungselements 140 aus der Führungskammer 136 zu verhindern, sind Sicherungsmittel in Form eines Langlochs 150 des Schienenbehandlungselements 140 und eines Langloch-Eingriffsbolzens 152 vorgesehen, welcher von der Hauptfläche 136a der scheibenförmigen Führungskammer 136 ausgehend das Langloch 150 durchdringt. Das Langloch 150 hat gegenüber dem Langloch-Eingriffsbolzen 152 in allen Richtungen ein gewisses Seitenspiel. Dabei ist das Seitenspiel in der durch die Randflächen 136b vorgegebenen Führungsrichtung H so bemessen, daß einerseits, wenn der Führungswagen 112 auf der Führungsschiene 110 angebracht ist, die Andrückung der Schabekanten 142 an die Laufbahnen 110k nicht behindert wird und daß andererseits, wenn der Führungswagen 112 von der Führungsschiene 110 abgezogen ist, das Schienenbehandlungselement 140 durch die Expansionswirkung der elastisch komprimierten O-Ringe 144b nicht aus der Führung durch die scheibenförmige Führungskammer 136 ausgeschoben werden kann.

Auch im Stegteil 124f des Behandlungselemententrägers 124 weist die Trägerplatte 126 eine scheibenförmige Führungskammer 156 auf, welche durch eine Hauptfläche 156a und Randflächen 156b,156c begrenzt ist und wiederum durch den Deckel 128 vervollständigt wird. In dieser scheibenförmigen Führungskammer 156 ist ein Schienenbehandlungselement 158 für die Kopffläche 110h der Schiene 110 oder deren Abdeckblech untergebracht. Dieses Schienenbehandlungselement 158 wird durch Vorspannkörper 144 mit einer Schabekante 160 gegen die Kopffläche 110h der Führungsschiene 110 angedrückt. Die Lagerung der Vorspannkörper 144 innerhalb der scheibenförmigen Führungskammer 156 entspricht der Lagerung der Vorspannkörper 144 innerhalb der Führungskammer 136. Das Ausschieben des Schienenbehandlungselements 158 aus der scheibenförmigen Führungskammer 156 ist durch eine Langloch-Bolzen-Kombination 150,152 verhindert, deren Wirkung die gleiche ist wie im Falle des Schienenbehandlungselements 140.

In der Fig. 5 erkennt man, daß sich die Schienenbehandlungselemente 140 und 158 in einem Überlappungsbereich U an der Kante zwischen der Seitenfläche 110f und der Kopffläche 110h überlappen. Diese Überlappung ist notwendig, um die Oberfläche der Führungsschiene 110 auch in diesem kritischen Bereich einer Schabebehandlung zu unterwerfen. Die Überlappung wird dadurch möglich, daß das Behandlungselement 158 angrenzend an die Schabekante 160 eine Ausnehmung 164 aufweist, in welche die oberen Randbereiche 166 der Behandlungselemente 140 eingreifen. Die Überlappung ist insbesondere aus Fig. 9 zu ersehen.

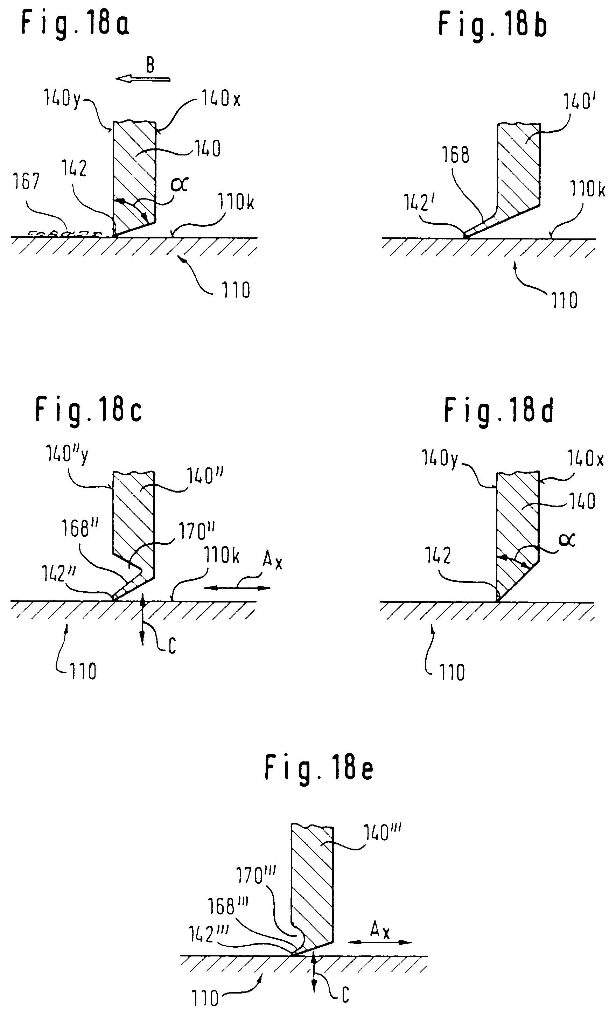

In Fig. 18a erkennt man die Schabekante 142 im Schnitt. Dabei liegt die Seitenfläche 140x dem Führungswagen näher, während die Seitenfläche 140y des Behandlungselements 140 von dem Führungswagen entfernter liegt. Man erkennt, daß die Schabekante 142 ebenfalls führungswagenfern in der Fläche 140y angeordnet ist. Die Schabekante 142 dient dazu, Späne und andere Verunreinigungen, auch wenn diese fest an der Lauffläche 110k anhaften, von der Lauffläche abzuschaben. Die Späne sind in Fig. 18a bei 167 angedeutet; sie werden abgeschabt, wenn der in Fig. 18a nicht eingezeichnete, auf der rechten Seite des Behandlungselements 140 liegende Führungswagen in der Bewegungsrichtung B parallel zu der Schienenachse Aₓ bewegt wird.

In der Fig. 18b erkennt man eine Schabekante 142', welche an dem Behandlungselement 140' an der Spitze einer Schaufelf1äche 168 angeordnet ist.

In Fig. 18c erkennt man nochmal eine andere Ausführungsform, bei der die Schabekante 142" eines Behandlungselements 140" an der Spitze einer Schaufelfläche 168" ausgebildet ist. Dabei ist die Schaufelfläche 168" durch eine Kerbe 170" in der von dem Führungswagen abgelegenen Seitenfläche 140"y geformt. Bei dieser Ausführungsform ist die Schaufelfläche 168" und die Kante 142" in der Achsrichtung Aₓ gegenüber dem Körper des Behandlungselements 140" im wesentlichen starr. Hingegen ist durch die Kerbe 170" die Schaufel fläche 168" und die Schabekante 142" in der Richtung C nachgiebig, wenn die Kerbe 170" entsprechend tief angeordnet ist.

In der Ausführungsform nach Fig. 18d erkennt man eine Geometrie des Behandlungselements 140, die sich von demjenigen der Fig. 18a nur dadurch unterscheidet, daß der Winkel α spitzwinkliger ausgeführt ist als in Fig. 18a.

In Fig. 18e schließlich erkennt man eine Abwandlung, bei der die Kerbe 170"' Rundquerschnitt besitzt statt des Dreiecksquerschnitts gemäß Fig. 18c. Auch hier ist wieder angrenzend an die Schabekante 142"' eine Schaufelfläche 168"' gebildet. Auch hier kann die Schabekante 142"' bei entsprechender Bemessung der Kerbe 170"' elastisch in Richtung C sein. In der Achsrichtung Aₓ dagegen ist die Schabekante wiederum im wesentlichen starr gegenüber dem Schienenbehandlungselement 140"'.

Wenn von einer Schabekante gesprochen wird, so soll damit besagt werden, daß diese Schabekante geeignet ist, Verunreinigungen, auch anhaftende Verunreinigungen, von der jeweiligen Laufbahn oder sonstigen behandelten Fläche der Führungsschiene abzuschaben. Es ist weniger daran gedacht, Material der Führungsschiene 110 von dieser abzuschaben.

Die Materialauswahl für die Behandlungselemente und insbesondere für die Schabekanten erfolgt entsprechend dem jeweils vorgesehenen Einsatzfall. Wenn mit stark anhaftenden Spänen an der Oberfläche der Führungsschiene gerechnet werden muß, so wird man das Schienenbehandlungselement aus einem relativ harten Material fertigen, um eine große Standzeit der Schienenbehandlungselemente zu erreichen. In diesem Fall ist insbesondere an metallische Schienenbehandlungselemente gedacht. Daneben kommen auch Schienenbehandlungselemente aus Kunststoff in Frage.

Bei der Herstellung der Trägerplatte 126 und des Deckels 128 kann man ebenfalls metallische Werkstoffe verwenden, insbesondere Werkstoffe, die sich im Druckgußverfahren verarbeiten lassen, um auf diese Weise die Führungskammern 136 und 156 leicht ausbilden zu können. Man kann aber auch für die Herstellung der Trägerplatte 126 und des Deckels 128 Kunststoffe verwenden, insbesondere im Spritzgußverfahren.

Die Montage des Führungswagens 112 auf der Führungsschiene 110 kann erfolgen, nachdem die Behandlungseinheit 120 bereits an dem Führungswagen 112 durch die Schrauben 122 angeschraubt worden ist. Das Aufbringen des Führungswagens mit den angeschraubten Behandlungseinheiten 120 auf die Führungsschiene 110 kann dann dadurch erleichtert werden, daß die Führungsschiene an ihren Enden abgeschrägte Einweiseflächen aufweist, welche die Behandlungselemente 158 und 140 beim Aufschieben des Führungswagens 112 zwangsläufig gegen die Wirkung der elastischen Vorspannkörper 144 zurückschieben.

Daneben ist es auch möglich, die Führungswagen grundsätzlich mit einem Führungsstück zusammen auszuliefern, dessen Länge annähernd gleich oder vorzugsweise geringfügig größer als die Länge des Führungswagens ist. Dieses Führungsstück kann wiederum an einem Ende mit abgeschrägten Einweisungsflächen ausgeführt sein, so daß der Zusammenbau des Führungswagens mit dem Führungsstück erleichtert ist. Man kann dann, wenn der Führungswagen auf die Führungsschiene aufgebracht werden soll, auf welcher er während des Arbeitsbetriebs verbleibt, das Führungsstück in Flucht zu dieser Führungsschiene halten und ggf. durch formschlüssigen Eingriff in Flucht mit dieser Führungsschiene sichern. Das Führungsstück wird dann an seinem mit der Führungsschiene zusammenstoßenden Ende so ausgebildet, daß es einen möglichst glatten Übergang zu der Führungsschiene bildet. Dann kann anschließend der Führungswagen von dem in Flucht zu der Führungsschiene gehaltenen Führungsstück auf die Führungsschiene übergeschoben werden, ohne daß dieses Überschieben durch die in Richtung auf das Führungsstück und später auf die Führungsschiene vorgespannten Behandlungselemente behindert wird.

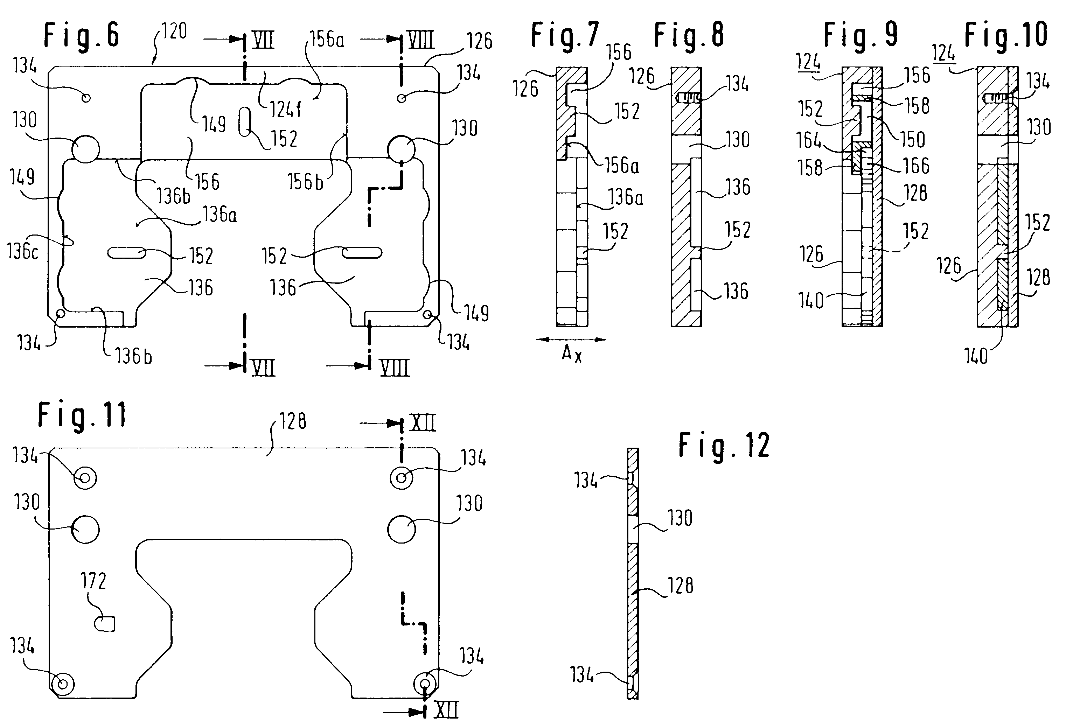

Das Aufbringen des mit den Behandlungseinheiten bereits zusammenmontierten Führungswagens auf die Führungsschiene kann auch dadurch erleichtert werden, daß Positionierungsmittel oder Haltemittel vorgesehen werden, um die Behandlungselemente 140 und 158 zunächst in einer unwirksamen Stellung zu halten. So kann beispielsweise in das Langloch 150 gemäß Fig. 5 zwischen das linke Ende des Langlochs und das linke Ende des Langloch-Eingriffsbolzens 152 ein Füllstück 170 eingedrückt werden, wenn man in dem Deckel 128 gemäß Fig. 11 eine Füllstückeinsetzöffnung 172 vorsieht. Durch dieses Füllstück 170 werden dann die Schienenbehandlungselemente 140 und 158 in einer unwirksamen Stellung gehalten, in welcher der Führungswagen 112 ohne Behinderung durch die Schienenbehandlungselemente 140 und 158 auf die Führungsschiene aufgeschoben werden kann. Erst wenn der Führungswagen 112 auf die Führungsschiene 110 aufgeschoben ist, werden die Füllstücke 170 durch die Deckelöffnungen 172 zurückgezogen, so daß erst dann die Schienenbehandlungselemente 140 und 158 mit ihren Schabekanten 142 bzw. 160 an die Schienenoberfläche zum Anliegen kommen. Wenn die Möglichkeit besteht, die Schienenbehandlungselemente 140 und 158 durch Positionierungs- oder Halteelemente etwa nach Art der Füllstücke 170 in einer unwirksamen Stellung zu halten, so ist es auch leicht möglich, eine komplette vormontierte Schienenbehandlungseinheit 120 gesondert von dem Führungswagen auf die Führungsschiene aufzubringen und erst dort mit dem Führungswagen zu verbinden, insbesondere zu verschrauben. Auf diese Weise kann man die Schienenbehandlungseinheiten 120 austauschen, ohne daß man den Führungswagen von der Führungsschiene abnimmt. Dies kann von Vorteil sein, wenn die ganze Linearführungseinheit unter beengten räumlichen Verhältnissen an einer übergeordneten Maschine oder Vorrichtung angebaut ist.

Das Prinzip, die Schienenbehandlungselemente durch Positionierungs- oder Haltemittel in einer unwirksamen Stellung zu halten, bis die Montage des Führungswagens auf der Führungsschiene oder bis die Montage der Schienenbehandlungseinheiten an dem bereits auf die Führungsschiene angebrachten Führungswagen beendet ist, läßt sich auch bei anderen Ausführungsformen von Schienenbehandlungseinheiten mit in Richtung auf die Führungsschiene vorgespannten Schienenbehandlungselementen anwenden, beispielsweise auch bei Schienenbehandlungselementen, welche entsprechend der europäischen Offenlegungsschrift 512 253 A1 mit lamellenförmigen Schienenbehandlungselementen ausgeführt sind (vgl. dort Fig. 5, Position 9). Man könnte dort die lamellenförmigen Schienenbehandlungselemente beispielsweise über einen Draht oder einen Kunststoffaden in unwirksamer Stellung halten, in welcher sie soweit abgewinkelt sind, daß sie beim Aufschieben des Führungswagens auf die Führungsschiene nicht mit der Führungsschiene in Kollision treten. Ist dann der Führungswagen auf die Führungsschiene aufgebracht, so könnte man die Drähte oder Kunststoffäden einfach abzwicken und damit erreichen, daß die Lamellen dann zur Anlage an der Führungsschiene gelangen.

Man erkennt aus der Fig. 5, daß die Schabekante 142 des Schienenbehandlungselements 140 exakt dem Profilverlauf der Führungsschiene 110 im Bereich ihrer Seitenfläche 110f angepaßt ist. Die Führungsschienen 110 werden mit höchster Genauigkeit hergestellt, um entsprechend genaue Führungen geführter Objekte in einer übergeordneten Maschine zu erreichen. Genauigkeit in der Größenordnung von einigen wenigen micron istdurchaus in Betracht zu ziehen. Es bereitet keine Schwierigkeiten, die Schabekanten 142 entsprechend genau herzustellen, um eine gleichmäßige, spaltfreie Anlage der Schabekante 142 an der Seitenfläche 110f über den ganzen erfaßten Profilverlauf zu erzielen. Um nun sicherzustellen, daß tatsächlich eine spaltfreie Anlage längs des gesamten erfaßten Profilbereichs eintritt, kann man dem durch die Randflächen 136b in der zur Achsrichtung Aₓ orthogonal geführten Schienenbehandlungselement 140 gegenüber den Randflächen 136b ein gewisses translatorisches und rotatorisches Spiel belassen, so daß sich das Schienenbehandlungselement ohne Rücksicht auf die Genauigkeit der Herstellung der Randflächen 136b und ohne Rücksicht auf die Genauigkeit der Befestigung des Behandlungselemententrägers 124 mit seiner Schabekante 142 exakt an den Profilverlauf der Seitenflächen 110f anpassen kann. Diese Maßnahme ist insbesondere dann sehr vorteilhaft, wenn ein von der Geradlinigkeit abweichender Verlauf des Schienenprofils und der Schabekante 142 gegeben ist. Selbstverständlich müssen auch das Langloch 150 und der Langloch-Eingriffsbolzen 152 ein entsprechendes Spiel gestatten.

Die Führung des Schienenbehandlungselements 158 an den Randflächen 156b kann entsprechend ausgeführt sein.

Zur Führung der Schienenbehandlungselemente 140 und 158 an den Hauptflächen oder Führungsflächen 136a und 156a ist noch folgendes nachzutragen: Man erkennt aus Fig. 7, daß diese Hauptflächen 136a und 156a in der Richtung Aₓ gegeneinander versetzt sind, und man erkennt aus der Fig. 9, daß die Dicke des Schienenbehandlungselements 158 in der Achsrichtung Aₓ größer ist als die Dicke des Schienenbehandlungselements 140. Die Aussparung 164 des Schienenbehandlungselements 158 entspricht in ihrer Tiefe der Dicke des Schienenbehandlungselements 140. Auf diese Weise wird erreicht, daß das Schienenbehandlungselement 140 mit seinem Randbereich 166 an dem Schienenbehandlungselement 158 im Bereich von dessen Aussparung 164 plan anliegt. Diese Plananliegen ist in Verbindung mit der Überlappung von Bedeutung dafür, daß die gesamte Profiloberfläche der Führungsschiene 110 der Behandlung unterworfen wird, und daß keine Schmutzteilchen im Überlappungsbereich U der beiden Schienenbehandlungselemente 140 und 158 Durchtrittsmöglichkeiten finden können. Dank der Gestaltung des Trägerteils 126 gemäß Fig. 7 wird es möglich, den Deckel 128 an seiner den Schienenbehandlungselementen 140,158 anliegenden Seite durchgehend flach auszubilden.

Die erfindungsgemäße Linearführungseinrichtung ist jedenfalls dann immer anwendbar, wenn ein Führungswagen mit rollenden Führungsmitteln an der Führungsschiene geführt ist. Neben den beispielhaft beschriebenen rollenden Führungsmitteln gemäß Fig. 1 und 4 ist auch die Verwendung von endlosen Kugelschleifen am Führungswagen denkbar, wie sie beispielsweise in der DE-OS 36 20 571 beschrieben sind.

Zu den Vorspannmitteln 144 ist noch zu erwähnen, daß auf die Kunststoffscheibe 144a auch verzichtet werden kann. Ein O-Ring 144b genügt, um die Vorspannung der Schienenbehandlungselemente 140,158 zustande zu bringen. In diesem Fall muß der O-Ring 144b dem Abstand zwischen der Hauptfläche 136a und dem Deckel 128 angepaßt sein.

## Patentansprüche

1. Linearführungseinrichtung, umfassend eine Führungsschiene (10;110) mit einer Achse (Aₓ) und mindestens einer Laufbahn (10c;110k) und mindestens einen Führungswagen (12;112) mit mindestens einem im Betriebszustand an dieser Laufbahn (10c;110k) geführten Laufelement (12a;116a), wobei an dem Führungswagen (12;112) ein Behandlungselemententräger (14;124) für mindestens ein Schienenbehandlungselement (34;140,158), insbesondere ein Laufbahnbehandlungselement (34;140,158), angebracht ist, und wobei dieses Schienenbehandlungselement (34;140,158) an dem Behandlungselemententräger (14;124) in einer im wesentlichen achsnormalen Ebene durch Führungsmittel (24;136,156) geführt und gegen die Führungsschiene (10;110) vorgespannt ist,
dadurch gekennzeichnet,
daß das Schienenbehandlungselement (34;140,158) in den Führungsmitteln (24;136,156) des Behandlungselemententrägers (14;124) durch Verlustsicherungsmittel (26c;150,152) gesichert ist, welche von der Führungsschiene (10;110) unabhängig sind.

2. Einrichtung nach Anspruch 1,
dadurch gekennzeichnet,
daß der Behandlungselemententräger als ein Schmierelemententräger (14) für ein Laufbahnschmierelement (34) ausgebildet ist, daß dieses Laufbahnschmierelement (34) aus einem Schmiermittel verteilenden und bezüglich der Laufbahn (10c) anschmiegfähigen Werkstoff besteht und daßdieses Laufbahnschmierelement (34) mit einem Schmiermittelvorrat des Schmierelemententrägers (14) in Verbindung steht, wobei das Laufbahnschmierelement (34) in einer Schmierelementenfassung (26) unverlierbar aufgenommen ist und die Schmierelementenfassung (26) in dem Schmierelemententräger (14) ebenfalls unverlierbar aufgenommen und in einer zur Achse (Aₓ) im wesentlichen orthogonalen Richtung beweglich geführt und in Richtung auf die Laufbahn (10c) vorgespannt ist.

3. Einrichtung, nach Anspruch 2,
dadurch gekennzeichnet,
daß der Schmiermittelvorrat außerhalb der Schmierelementenfassung (26), jedoch innerhalb des Schmierelemententrägers (14) untergebracht ist und daß eine Schmiermittelverbindung (38) zwischen dem Schmiermittelvorrat (40) und dem innerhalb der Schmierelementenfassung (26) aufgenommenen Laufbahnschmierelement (34) besteht.

4. Einrichtung nach Anspruch 3,
dadurch gekennzeichnet,
daß die Schmierelementenfassung (26) ein Fassungsgehäuse (26) aufweist mit einem zu der Führungsrichtung (24) der Schmierelementenfassung (26) im wesentlichen parallelen Mantelfläche (26a), wobei dieses Fassungsgehäuse (26) ein zur Laufbahn hin offenes Ende (30) aufweist und das Laufbahnschmierelement (34) über dieses offene Ende (30) in Richtung auf die Laufbahn (10c) hin vorsteht.

5. Einrichtung nach Anspruch 4,
dadurch gekennzeichnet,
daß das Fassungsgehäuse (26) an seinem laufbahnfernen Ende eine öffnung besitzt, welche in Verbindung mit dem Schmiermittelvorrat (40) steht.

6. Einrichtung nach Anspruch 4 oder 5,
dadurch gekennzeichnet,
daß das Fassungsgehäuse (26) durch eine an seiner Mantelfläche (26a) anliegende, im wesentlichen ringsum anliegende, Dichtstelle (66, 68) des Schmierelemententrägers hindurchgeführt ist.

7. Einrichtung nach einem der Ansprüche 2 bis 6,
dadurch gekennzeichnet,
daß die Schmierelementenfassung (26) einen Anschlag (26c) besitzt, welcher im Zusammenwirken mit einem Gegenanschlag des Schmierelemententrägers (14) die Beweglichkeit der Schmierelementenfassung (26) in Richtung auf die Laufbahn begrenzt.

8. Einrichtung nach Anspruch 7,
dadurch gekennzeichnet,
daß bei Ausführung der Schmierelementenfassung (26) mit einem Fassungsgehäuse (26) der Anschlag (26c) von einem auswärts abstehenden Bund des Fassungsgehäuses (26) an dessen laufbahnfernem Ende gebildet ist.

9. Einrichtung nach einem der Ansprüche 4 bis 8,
dadurch gekennzeichnet,
daß das Fassungsgehäuse (26) an mittlerer Stelle seiner in seiner Führungsrichtung (24) verlaufenden Länge ein Stützglied (28) aufweist, welches einerseits als Anschlag für das von dem laufbahnnahen Ende her in das Fassungsgehäuse (26) eingeführte Laufbahnschmierelement (34) und andererseits als Anschlag für eine Vorspannfeder (42) dient, welche an dem Schmierelemententräger (14) abgestützt ist.

10. Einrichtung nach Anspruch 9,
dadurch gekennzeichnet,
daß das Stützglied (28) mit einem Zentrierdorn (42a) für eine Schraubendruckfeder (42) ausgeführt ist.

11. Einrichtung nach einem der Ansprüche 9 und 10,
dadurch gekennzeichnet,
daß das Stützglied (28) nur einen Teil des Querschnitts des Fassungsgehäuses (26) ausfüllt und Durchgänge (38) für das Schmiermittel innerhalb des Fassungsgehäuses frei läßt.

12. Einrichtung nach einem der Ansprüche 2 bis 11,
dadurch gekennzeichnet,
daß das Laufbahnschmierelement (34) innerhalb der Schmierelementenfassung (26) im Reibsitz aufgenommen ist.

13. Einrichtung nach einem der Ansprüche 2 bis 12,
dadurch gekennzeichnet,
daß das Laufbahnschmierelement (34) von porösem, schmiermittelleitendem Werkstoff gebildet ist.

14. Einrichtung nach einem der Ansprüche 2 bis 13,
dadurch gekennzeichnet,
daß das Laufbahnschmierelement (34) von einem Filzkörper gebildet ist.

15. Einrichtung nach einem der Ansprüche 13 und 14,
dadurch gekennzeichnet,
daß das Laufbahnschmierelement (34) in einer als Fassungsgehäuse (26) ausgebildeten Schmierelementenfassung (26) im wesentlichen den gesamten Gehäusequerschnitt ausfüllt.

16. Einrichtung nach einem der Ansprüche 2 bis 15,
dadurch gekennzeichnet,
daß das Laufbahnschmierelement (34) mit einer derartigen Schmiermittelleitfähigkeit bezogen auf die Viskosität des jeweils eingesetzten Schmiermittels ausgeführt ist, daß im wesentlichen kein Schmiermittelverlust in Richtung senkrecht zur Führungsrichtung (24) des Laufbahnschmierelements eintritt.

17. Einrichtung nach einem der Ansprüche 2 bis 16,
dadurch gekennzeichnet,
daß bei Vorhandensein mehrerer Laufbahnen (10c) an der Führungsschiene (10) an ein und demselben Schmierelemententräger (14) in Zuordnung zu jeder dieser Laufbahnen (10c) mindestens ein Laufbahnschmierelement (34) vorgesehen ist.

18. Einrichtung nach Anspruch 17,
dadurch gekennzeichnet,
daß an ein und demselben Schmierelemententräger (14) zwei einander gegenüberstehende Laufbahnschmierelemente (34) vorgesehen sind, wobei deren Schmierelementenfassungen (26) annähernd miteinander fluchtende Führungsrichtungen aufweisen.

19. Einrichtung nach einem der Ansprüche 2 bis 18,
dadurch gekennzeichnet,
daß der Schmierelemententräger (14) als ein plattenförmiges Gebilde ausgebildet ist, welches an einer zur Achse der Führungsschiene im wesentlichen orthogonalen Stirnfläche (12c) des Führungswagens (12) angebracht ist.

20. Einrichtung nach Anspruch 19,
dadurch gekennzeichnet,
daß der Schmierelemententräger (14) eine innere Umfangskontur (22) besitzt, welche annähernd dem Außenquerschnitt der Führungsschiene (10) angepaßt ist und an dieser gegebenenfalls über eine der Kontur folgende Dichtung anliegt, wobei das mindestens eine Laufbahndichtungselement über diese Umfassungskontur in Richtung auf die jeweilige Laufbahn vorsteht.

21. Einrichtung nach einem der Ansprüche 2 bis 20,
dadurch gekennzeichnet,
daß innerhalb des Schmierelemententrägers (14) eine Lebensdauerfüllung von Schmiermitteln enthalten ist.

22. Einrichtung nach einem der Ansprüche 2 bis 21,
dadurch gekennzeichnet,
daß der Schmiermittelvorrat (40) mit einem Schmiermittelanschluß (48) für ein Schmiermittelnachfüllgerät ausgebildet ist, vorzugsweise in Form eines Schmiernippels mit Rückschlagwirkung.

23. Einrichtung, nach einem der Ansprüche 2 bis 22,
dadurch gekennzeichnet,
daß bei Anordnung mehrerer Laufbahnschmierelemente (34) an einem gemeinsamen Schmierelemententräger (14) diese mit einem gemeinsamen Schmiermittelvorrat (40, 46) in Verbindung stehen.

24. Einrichtung nach einem der Ansprüche 2 bis 23,
dadurch gekennzeichnet,
daß der Schmierelemententräger (14) als ein Flachgehäuse ausgebildet ist, welches an mindestens einer zur Achsrichtung (Ax) der Führungsschiene (10) im wesentlichen orthogonalen Endfläche (12c) des Führungswagens (12) als gesondertes Bauteil des Führungswagens-gewünschtenfalls lösbar-befestigt ist.

25. Einrichtung nach Anspruch 24,
dadurch gekennzeichnet,
daß das Flachgehäuse aus zwei sandwichartig aneinander anliegenden Flachgehäuseteilen (16) zusammengesetzt ist.

26. Einrichtung nach Anspruch 25,
dadurch gekennzeichnet,
daß die Flachgehäuseteile (16) von jeweils einer Hauptwand (18) und von über dieser Hauptwand (18) sich orthogonal zu dieser erhebenden Rippen (20) gebildet ist, welche im zusammengebauten Zustand in bezug auf eine gemeinsame zu den Hauptwänden (18) parallele Mittelebene prinzipiell spiegelsymmetrisch ausgebildet sind.

27. Einrichtung nach Anspruch 26,
dadurch gekennzeichnet,
daß die Flachgehäuseteile (16) identisch ausgebildet sind.

28. Einrichtung nach Anspruch 27,
dadurch gekennzeichnet,
daß an in zusammengebautem Zustand des Flachgehäuses aneinander anliegenden Rippenkopfflächen (20) der Rippen Dicht- und/oder Verbindungsmittel jeweils nur über einen Halbbereich der Flachgehäuseteile (16) angeordnet sind derart, daß sich diese im zusammengebauten Zustand über die gesamte Berührungsfläche der Flachgehäuseteile (16) verteilt ergänzen.

29. Einrichtung nach einem der Ansprüche 25 bis 28,
dadurch gekennzeichnet,
daß die Flachgehäuseteile (16) miteinander verschweißt, insbesondere ultraschallverschweißt oder verklebt sind.

30. Einrichtung nach einem der Ansprüche 2 bis 29,
dadurch gekennzeichnet,
daß der Schmierelemententräger (14) als ein den Schmiermittelvorrat (bei 40) und Schmiermittelleitungswege (46) nach außen dicht abschließendes Gehäuse ausgebildet ist, welches einen Schmiermittelaustritt nur im Bereich des mindestens einen Laufbahnschmierelements (34) aufweist.

31. Einrichtung nach Anspruch 30,
dadurch gekennzeichnet,
daß das Gehäuse eine Füllstelle (48) zum Einfüllen von Schmiermittel aufweist.

32. Einrichtung nach Anspruch 31,
dadurch gekennzeichnet,
daß die Füllstelle (48) mit einem lösbaren Verschluß oder einem Rückschlagnippel ausgeführt ist.

33. Einrichtung nach Anspruch 32,
dadurch gekennzeichnet,
daß die Füllstelle (48) an einem betriebsmäßig oberhalb des Schmiermittelvorrats (40) liegenden Ort angeordnet ist.

34. Einrichtung nach einem der Ansprüche 30 bis 32,
dadurch gekennzeichnet,
daß das Gehäuse aus zwei unter Vermittlung von Dichtbereichen aneinander anliegenden Gehäuseteilen besteht.

35. Einrichtung nach Anspruch 34,
dadurch gekennzeichnet,
daß die Gehäuseteile von Befestigungsöffnungen (56) zur Befestigung an dem Führungswagen (12) durchsetzt sind und daß die Gehäuseteile auch im Umgebungsbereich dieser Befestigungsöffnungen (56) gegeneinander abgedichtet sind.

36. Einrichtung nach einem der Ansprüche 30 bis 35,
dadurch gekennzeichnet,
daß an den Gehäuseteilen (16) Halbaufnahmekammern (66) für die Aufnahme jeweils der Hälfte eines Dichtrings (68) angeordnet sind, welcher Dichtring (68) von der jeweiligen Schmierelementenfassung (26) durchsetzt wird.

37. Einrichtung nach einem der Ansprüche 1 bis 36,
dadurch gekennzeichnet,
daß das mindestens eine Laufelement von einer Laufrolle (12a) gebildet ist.

38. Einrichtung nach Anspruch 37,
dadurch gekennzeichnet,
daß die Laufrolle (12a) eine konkave Mantelfläche besitzt, welche mit einem komplementären, die Führungsbahn bildenden Profil in Eingriff steht.

39. Einrichtung nach Anspruch 38,
dadurch gekennzeichnet,
daß das Profil (10c) von einer Rundprofilstange mit annähernd Kreisquerschnitt gebildet ist, welche auf einer Trägerschiene befestigt ist.

40. Einrichtung nach einem der Ansprüche 1 bis 39,
dadurch gekennzeichnet,
daß der Führungswagen (12) die Führungsschiene (10) angenähert U-förmig umgreift und daß an den beiden Schenkeln des U-förmig umgreifenden Führungswagens (12) jeweils mindestens eine Laufrolle (12a) angeordnet ist.

41. Einrichtung, nach einem der Ansprüche 1 bis 40,
dadurch gekennzeichnet,
daß der als Schmierelemententräger (14) ausgebildete Behandlungselemententräger ein dicht abgeschlossenes Gehäuse umfaßt, welches den Schmiermittelvorrat (40) enthält und daß dieses dicht abgeschlossene Gehäuse als Ausgang lediglich einen Durchtritt für einen Teil des mindestens einen als Laufbahnschmierelement (34) ausgebildeten Schienenbehandlungselements aufweist, wobei dieser Durchtritt durch das Laufbahnschmierelement (34) im wesentlichen vollständig abgeschlossen ist, so daß ein Schmiermittelaustritt lediglich durch Schmiermittelpermeation innerhalb des Laufbahnschmierelements (34) möglich ist.

42. Einrichtung nach einem der Ansprüche 1 - 41,
dadurch gekennzeichnet,
daß das Schienenbehandlungselement (34;140,158) innerhalb des Behandlungselemententrägers (14;124) durch Geradführungsmittel (24;136,156) geführt ist.

43. Einrichtung nach einem der Ansprüche 1 - 42,
dadurch gekennzeichnet,
daß das Schienenbehandlungselement (34;140,158) Anschlagmittel (26c;150) besitzt, welche im Zusammenwirken mit Gegenanschlagmitteln (152) des Behandlungselemententrägers (14; 124) die durch die Führungsmittel (24;136,156) belassene Beweglichkeit des Schienenbehandlungselements (34;140,158) beschränken.

44. Einrichtung nach einem der Ansprüche 1 - 43,
dadurch gekennzeichnet,
daß an ein und demselben Behandlungselemententräger (14;124) Führungsmittel (24;136,156) für eine Mehrzahl von Schienenbehandlungselementen (34;140,158) vorgesehen sind.

45. Einrichtung nach Anspruch 44,
dadurch gekennzeichnet,
daß an ein und demselben Behandlungselemententräger (14;124) zwei einander gegenüberstehende Schienenbehandlungselemente (34;140) vorgesehen sind.

46. Einrichtung nach einem der Ansprüche 1 - 45,
dadurch gekennzeichnet,
daß der Behandlungselemententräger (14;124) zusammen mit mindestens einem Schienenbehandlungselement (34;140,158) zu einer im wesentlichen vollständig vormontierten Baueinheit zusammengefaßt ist und daß an dieser Baueinheit Befestigungsmittel (56;130) vorgesehen sind, welche die Befestigung an dem Führungswagen (12;112) gestatten.

47. Einrichtung nach einem der Ansprüche 1 - 46,
dadurch gekennzeichnet,
daß der Behandlungselemententräger (14;124) mit einer im wesentlichen planen Anlagefläche zum Anbau an einer zur Achse (Aₓ) des Führungswagens (12;112) im wesentlichen orthogonalen Stirnfläche des Führungswagens (12;112) ausgeführt ist und daß der Behandlungselemententräger (14;124) mit im wesentlichen orthcgonal zu der Anlagefläche verlaufenden Befestigungslöchern (56;130) versehen ist, welche die Befestigung der Baueinheit an der Stirnfläche des Führungswagens (12;112) mittels die Baueinheit durchsetzender, in den Führungswagen (12;112) eingreifender Befestigungsbolzen (122) gestatten.

48. Einrichtung nach einem der Ansprüche 1 - 47,
dadurch gekennzeichnet,
daß der Behandlungselemententräger (14;124) als ein im wesentlichen planparalleler Flachkörper ausgebildet ist.

49. Einrichtung nach einem der Ansprüche 1 - 48,
dadurch gekennzeichnet,
daß der Behandlungselemententräger (14;124) als ein Gehäuse ausgebildet ist, wobei innerhalb dieses Gehäuses (14;124) die Führungsmittel (24;136,156) für das mindestens eine Schienenbehandlungselement (34;140,158) untergebracht sind.

50. Einrichtung nach einem der Ansprüche 1 - 49,
dadurch gekennzeichnet,
daß der Behandlungselemententräger (14;124) als ein im wesentlichen planparalleles Flachgehäuse ausgebildet ist.

51. Einrichtung nach einem der Ansprüche 1 - 50,
dadurch gekennzeichnet,
daß der Behandlungselemententräger (14;124) aus zwei sandwichartig aneinander anliegenden Trägerteilen (16;126,128) zusammengesetzt ist.

52. Einrichtung nach Anspruch 51,
dadurch gekennzeichnet,
daß die Führungsmittel (136,156) im Bereich von Berührungsflächen der sandwichartig aneinander anliegenden Trägerteile (126,128) angeordnet sind, insbesondere in der Weise, daß das mindestens eine Schienenbehandlungselement (140,158) und ihm zugehörige Vorspannmittel (144) nach Einlegen in Führungsmittel (136,156) des einen Trägerteils (126) durch Aneinanderanlegen der Berührungsflächen beider Trägerteile (126,128) und durch Befestigung der beiden Trägerteile (126,128) aneinander gegen Trennung von dem Behandlungselemententräger (124) gesichert sind.

53. Einrichtung nach Anspruch 51 oder 52,
dadurch gekennzeichnet,
daß die beiden Trägerteile (16;126,128) durch Verschweißen, insbesondere Ultraschallverschweißen, oder Verkleben oder Verschrauben oder Ineinanderrasten miteinander verbunden sind.

54. Einrichtung nach einem der Ansprüche 1 - 53,
dadurch gekennzeichnet,
daß der Führungswagen (12;112) in Längsrichtung der Achse (Aₓ) betrachtet im wesentlichen U-förmig ausgebildet ist mit einem einer Kopffläche (110h) der Führungsschiene (10;110) nahe liegenden Stegbereich (112f) und zwei je einer Seitenfläche (110f) der Führungsschiene (10;110) nahe liegenden Schenkelbereichen (112g).

55. Einrichtung nach Anspruch 54,
dadurch gekennzeichnet,
daß der U-förmige Führungswagen (12;112) durch je ein Rollmittelsystem (12a;116,118) zwischen den beiden Schenkelbereichen (112g) und der jeweils zugehörigen Seitenfläche (110f) der Führungsschiene (10;110) geführt ist.

56. Einrichtung nach Anspruch 55,
dadurch gekennzeichnet,
daß die Rollmittelsysteme (12a;116,118) an dem Führungswagen (12;112) angebracht sind und mit Laufbahnen (10c;110k) an den beiden Seitenflächen (110f) der Führungsschiene (10;110) in rollendem Eingriff stehen.

57. Einrichtung nach Anspruch 56,
dadurch gekennzeichnet,
daß die Rollmittelsysteme von an dem Führungswagen (12) einzeln gelagerten Rollen (12a) gebildet sind, welche an ihren Umfangsflächen mit Laufbahnen (10c) in rollendem Eingriff stehen.

58. Einrichtung nach Anspruch 56,
dadurch gekennzeichnet,
daß die Rollmittelsysteme (116,118) von an dem Führungswagen (112) geführten endlosen Wälzkörperreihen (116,118) gebildet sind.

59. Einrichtung nach einem der Ansprüche 1 - 58,
dadurch gekennzeichnet,
daß das Schienenbehandlungselement als ein Abstreifelement ausgebildet ist, welches etwaigen Schmutz von der Führungsschiene abstreift, wenn sich der Führungswagen längs der Führungsschiene bewegt.

60. Einrichtung nach einem der Ansprüche 1 - 59,
dadurch gekennzeichnet,
daß bei U-förmiger Ausführung des Führungswagens (12;112) der Behandlungselemententräger (14;124) ebenfalls U-förmig ausgebildet ist mit einem einer Kopffläche (110h) der Führungsschiene (10;110) gegenüberliegenden Stegteil (124f) und mit Seitenflächen (110f) der Führungsschiene (10;110) gegenüberliegenden Schenkelteilen (124g).

61. Einrichtung nach Anspruch 60,
dadurch gekennzeichnet,
daß in jedem der Schenkelteile (124g) jeweils ein Schienenbehandlungselement (34;140) zum Eingriff mit der jeweils zugehörigen Seitenfläche (110f) vorgesehen ist.

62. Einrichtung nach einem der Ansprüche 1 - 61,
dadurch gekennzeichnet,
daß an zwei in Achsrichtung voneinander abgelegenen Stirnflächen (12c;112k) des Führungswagens (12;112) je ein Behandlungselemententräger (14;124) angebracht ist.

63. Einrichtung nach einem der Ansprüche 1 - 62,
dadurch gekennzeichnet,
daß das Schienenbehandlungselement (140,158) als ein Schabelement zum Abschaben von ggf. anhaftenden Verunreinigungen (167) von der Führungsschiene (110) ausgebildet ist.

64. Einrichtung nach einem der Ansprüche 1 - 63,
dadurch gekennzeichnet,
daß das mindestens eine Schienenbehandlungselement (140, 158) bei Betrachtung des Führungsschienenprofils in Achsrichtung (Aₓ) der Führungsschiene (110) über eine zugehörige Laufbahn (110k) hinaus in Behandlungseinwirkung mit der Führungsschiene (110) steht.

65. Einrichtung nach Anspruch 64,
dadurch gekennzeichnet,
daß das gesamte Profil der Führungsschiene (110), zumindest innerhalb des von einem Führungswagen (112) bedeckten Profilbereichs, der Einwirkung von Schienenbehandlungselementen (140,158) ausgesetzt ist.

66. Einrichtung nach einem der Ansprüche 1 - 65, bei der an dem Führungswagen (112) mindestens zwei Schienenbehandlungselemente (140,158) in einer zur Achse im wesentlichen orthogonalen Ebene beweglich angeordnet und gegen die Führungsschiene (110) vorgespannt sind derart, daß sie mit jeweils einer Anlagekante (142,160) einem Umfangsabschnitt des Führungsschienenprofils anliegen,
dadurch gekennzeichnet,
daß sich die Anlagekanten (142,160) der mindestens zwei Schienenbehandlungselemente (140,158) in Profilumfangsrichtung gegenseitig überlappen.

67. Einrichtung nach einem der Ansprüche 1 - 66,
dadurch gekennzeichnet,
daß bei U-förmiger Ausführung des Führungswagens (112) mit einem einer Kopffläche (110h) der Führungsschiene (110) gegenüberliegenden Stegbereich (112f) und zwei je einer Seitenfläche (110f) der Führungsschiene (110) gegenüberliegenden Schenkelbereichen (112g) jedem der Schenkelbereiche (112g) ein Schienenbehandlungselement (140) für eine Seitenfläche (110f) der Führungsschiene (110) und dem Stegbereich (112f) ein Schienenbehandlungselement (158) für die Kopffläche (110h) der Führungsschiene (110) zugeordnet ist.

68. Einrichtung nach Anspruch 67,
dadurch gekennzeichnet,
daß sich die beiden den Seitenflächen (110f) zugeordneten Schienenbehandlungselemente (140) in Profilumlaufrichtung mit dem der Kopffläche (110h) zugeordneten Schienenbehandlungselement (158) überlappen.

69. Einrichtung nach einem der Ansprüche 1 - 68,
dadurch gekennzeichnet,
daß bei sandwichartiger Zusammensetzung des Behandlungselemententrägers (14;124) aus zwei Trägerteilen (16;126, 128) mit zur Achse (Aₓ) orthogonalen Berührungsflächen der eine (16;126) dieser Trägerteile (16;126,128) in seiner Berührungsfläche reliefartig mit einer Führungsausnehmung (24;136,156) für das mindestens eine Schienenbehandlungselement (34;140,158) ausgebildet ist, wobei diese Führungsausnehmung (24;136,156) durch den jeweils anderen Trägerteil (16; 128) geschlossen ist.

70. Einrichtung nach Anspruch 69,
dadurch gekennzeichnet,
daß die Führungsausnehmung (136,156) durch eine zur Achse (Aₓ) orthogonale Hauptfläche (136a) und je zwei zueinander parallele Randflächen (136b) gebildet ist und der jeweils andre Trägerteil (128) eine weitere zur Achse (Aₓ) orthogonale Hauptfläche bildet.

71. Einrichtung nach Anspruch 70,
dadurch gekennzeichnet,
daß die Verlustsicherungsmittel (150,152) zum Sichern des jeweiligen Schienenbehandlungselements (140,158) gegen Austritt aus der Führungsausnehmung (136,156) an einer der Hauptflächen (136a,156a) vorgesehen sind.

72. Einrichtung nach Anspruch 71,
dadurch gekennzeichnet,
daß die Verlustsicherungsmittel (150,152) als Bolzen-Langloch-Sicherungsmittel ausgeführt sind.

73. Einrichtung nach Anspruch 72,
dadurch gekennzeichnet,
daß die Verlustsicherungsmittel (150,152) von einem Langloch (150) des jeweiligen Schienenbehandlungselements (140,158) und einem Langloch-Eingriffsbolzen (152) an einem Trägerteil (126) gebildet sind, wobei der Langloch-Eingriffsbolzen (152) vorzugsweise einstückig an dem jeweiligen Trägerteil (126) ausgebildet ist.

74. Einrichtung nach einem der Ansprüche 1 - 73,
dadurch gekennzeichnet,
daß im Bereich der Führungsmittel (24;136,156) ein von dem jeweiligen Schienenbehandlungselement (34;140,158) gesondert hergestelltes Vorspannmittel (42;144) zum Vorspannen der dem jeweiligen Schienenbehandlungselement (34;140,158) zugehörigen Schienenbehandlungskontur (36) bzw. -kante (142,160) gegen die jeweils zugehörige Führungsschiene (10;110) untergebracht ist.

75. Einrichtung nach einem der Ansprüche 1 - 74,
dadurch gekennzeichnet,
daß Vorspannmittel zum Vorspannen des Schienenbehandlungselements von jeweils mindestens einer Schraubendruckfeder (42) gebildet ist.

76. Einrichtung nach einem der Ansprüche 1 - 75,
dadurch gekennzeichnet,
daß Vorspannmittel (144) zum Vorspannen des Schienenbehandlungselements (140,158) einen zumindest an seiner Oberfläche aus elastomerem Werkstoff (144b) bestehenden Vorspannkörper (144) umfassen, welcher durch die Wirkung von Anschlagmitteln (150,152) oder durch das Anliegen des Schienenbehandlungselements (140,158) an der Führungsschiene (110) zwischen einer Widerlagerfläche (148) an dem Führungswagen (112) und einer Angriffsfläche (146) des Schienenbehandlungselements (140,158) unter elastischer Verformung des elastomeren Werkstoffs (144b) eingespannt ist.

77. Einrichtung nach Anspruch 76,
dadurch gekennzeichnet,
daß der Vorspannkörper (144) einen Elastomerring (144b) aufweist, welcher vorzugsweise als O-Ring ausgebildet ist.

78. Einrichtung nach Anspruch 77,
dadurch gekennzeichnet,
daß der Elastomerring (144b) einen Rundscheibenkörper (144a) in seinem Zentrum aufnimmt.

79. Einrichtung nach einem der Ansprüche 1 - 78,
dadurch gekennzeichnet,
daß das mindestens eine Schienenbehandlungselement (140, 158) in einer zur Achse der Führungsschiene (110) im wesentlichen orthogonalen, scheibenförmigen Führungskammer (136,156) geführt ist und daß in dieser scheibenförmigen Führungskammer (136,156) zwischen einer schienenfernen Endfläche (148) des Schienenbehandlungselements (140) und einer dieser schienenfernen Endfläche (148) gegenüberliegenden Begrenzungsfläche (136c) der scheibenförmigen Führungskammer (136) mindestens ein Vorspannkörper (144) eingelegt ist, welcher zwischen zwei Hauptflächen (136a,128) der scheibenförmigen Führungskammer (136) geführt und durch Aussparungen (146,149) in der schienenfernen Endfläche (148) des Schienenbehandlungselements (140) oder/und der Begrenzungsfläche (136c) in der scheibenförmigen Führungskammer (136) in Arbeitsposition gesichert ist.

80. Einrichtung nach einem der Ansprüche 1 + 42 - 79,
dadurch gekennzeichnet,
daß das Schienenbehandlungselement (140,158) scheibenförmig ausbildet und im wesentlichen orthogonal zur Achse (Aₓ) der Führungsschiene (110) angeordnet ist und an einem der Führungsschiene (110) nahen Rand eine Schabkante (142,160) aufweist, welche in Achsrichtung (Aₓ) der Führungsschiene (110) gegenüber dem Führungswagen (112) im wesentlichen starr ist.

81. Einrichtung nach Anspruch 80,
dadurch gekennzeichnet,
daß die Schabkante (142) im Bereich einer von dem Führungswagen (112) fernen Endfläche (140y) des scheibenförmigen Schienenbehandlungselements (140) angeordnet ist.

82. Einrichtung nach Anspruch 80 oder 81,
dadurch gekennzeichnet,
daß angrenzend an die Schabkante (142') eine von dem Laufwagen (112) weg weisende Schaufelfläche (168) an dem Schienenbehandlungselement (140) ausgebildet ist.

83. Einrichtung nach Anspruch 82,
dadurch gekennzeichnet,
daß die Schaufelfläche (168) an einem von dem Führungswagen (112) weg weisenden Vorsprung des scheibenförmigen Schienenbehandlungselements (140') ausgebildet ist.

84. Einrichtung nach Anspruch 82,
dadurch gekennzeichnet,
daß die Schaufelfläche (168") durch eine Einkerbung (170") in dem scheibenförmigen Schienenbehandlungselement (140") gebildet ist.

85. Einrichtung nach einem der Ansprüche 80 - 84,
dadurch gekennzeichnet,
daß die Schabkante (142") in zur Achsrichtung (Aₓ) der Führungsschiene (110) orthogonaler Richtung (C) elastisch auslenkbar an einer Scheibenstruktur des Schienenbehandlungselements (140") angebracht ist.

86. Einrichtung nach einem der Ansprüche 80 - 85,
dadurch gekennzeichnet,
daß von zwei einander in Profilumlaufrichtung der Führungsschiene (110) überlappenden Schienenbehandlungselementen (140,158) das eine (158) mit einer Randaussparung (164) versehen ist, welche von dem jeweils anderen (140) teilweise ausgefüllt ist.

87. Einrichtung nach einem der Ansprüche 1 - 86,
dadurch gekennzeichnet,
daß der Behandlungselemententräger (14;124) von mindestens einem aus Kunststoff gegossenen oder gespritzten Formteil (16;126,128) gebildet ist.

88. Einrichtung nach einem der Ansprüche 1 - 87,
dadurch gekennzeichnet,
daß das mindestens eine Schienenbehandlungselement (34;140, 158) aus Metall, wie Stahl, Messing, Metallguß, oder aus polymerem Werkstoff, oder aus Filz hergestellt ist.

89. Einrichtung nach einem der Ansprüche 1 - 88,
dadurch gekennzeichnet,
daß die Führungsschiene (110) mindestens eine Seitenfläche (110f) mit einer im Querschnitt trapezförmigen Profilvertiefung aufweist, wobei die Flanken dieser Profilvertiefung Laufbahnen (110k) für je einen endlosen Rollenumlauf (116,118) bilden und daß an dem mindestens einen Schienenbehandlungselement (140) ein entsprechend trapezförmiger Vorsprung ausgebildet ist, dessen Flanken (142) zum Zusammenwirken mit den Laufbahnen (110k) bestimmt sind.

90. Einrichtung nach einem der Ansprüche 66 - 89,
dadurch gekennzeichnet,
daß die Schienenbehandlungselemente (140,158) im Überlappungsbereich (U) aneinander anliegen.

91. Einrichtung nach einem der Ansprüche 66 - 90,
dadurch gekennzeichnet,
daß die Schienenbehandlungselemente (140,158) an in Achsrichtung (Aₓ) der Führungsschiene (110) gegeneinander versetzten, zur Achsrichtung (Aₓ) im wesentlichen orthogonalen Führungsflächen (136a,156a) anliegen.

92. Einrichtung nach Anspruch 91,
dadurch gekennzeichnet,
daß die in axialer Richtung gegeneinander versetzten und zur Achsrichtung im wesentlichen orthogonalen Führungsflächen (136a,156a) an einem ersten (126) von zwei flach aneinander anliegenden Trägerteilen (126,128) angeformt sind, daß die Schienenbehandlungselemente (140, 158) entsprechend der Versetzung der Führungsflächen (136a,156a) unterschiedliche Dicke, in Achsrichtung gemessen, besitzen, daß in dem dickeren (158) der beiden Schienenbehandlungselemente (140,158) eine Randaussparung (164) annähernd entsprechend der Dicke des dünneren (140) der beiden Schienenbehandlungselemente (140,158) ausgebildet ist und daß das dünnere (140) der beiden Schienenbehandlungselemente (140, 158) mit einem Randbereich (166) in die Randaussparung (164) eingreift.

93. Einrichtung nach Anspruch 92,
dadurch gekennzeichnet,
daß das zweite (128) der beiden flach aneinander anliegenden Trägerteile (126,128) mit einer gemeinsamen Planfläche an den beiden Schienenbehandlungselementen (140,158) anliegt.

94. Einrichtung nach einem der Ansprüche 66 - 93,
dadurch gekennzeichnet,
daß mindestens eines (140) der Schienenbehandlungselemente (140,158) in zur Achsrichtung (Aₓ) orthogonaler Ebene ein Führungsspiel besitzt, welches ungeachtet der Führungsgenauigkeit von in der orthogonalen Ebene wirkenden Führungsmitteln (136b) eine Selbstanpassung der Anlagekante (142) an den zugeordneten Teil eines Profilverlaufs der Führungsschiene (110) gestattet.

95. Einrichtung nach einem der Ansprüche 1 - 94,
gekennzeichnet durch lösbare Haltemittel (170) an dem Führungswagen (112) für das Schienenbehandlungselement (140,158), welche das Schienenbehandlungselement (140,158) vor dem Aufbringen des Führungswagens (112) auf die Führungsschiene (110) in einer unwirksamen Stellung halten, d.h. in einer Stellung, in welcher das Schienenbehandlungselement (140,158) bei positionsgerechter Annäherung des Führungswagens (112) an ein Ende der Führungsschiene (110) in Richtung der Achse (Aₓ) der Führungsschiene (110) außer Eingriff mit der Führungsschiene (110) bleibt.

96. Einrichtung nach einem der Ansprüche 1 - 41,
dadurch gekennzeichnet,
daß an dem als Schmierelemententräger ausgebildeten Behandlungselemententräger (14) eine innere Umfangskontur (22), d.h. eine der Führungsschiene zugekehrte Umfangskontur (22), angeordnet ist, welche - gewünschtenfalls über eine Dichtung - an der Führungsschiene (10) anliegt und als Abstreifvorrichtung wirkt.

97. Einrichtung nach Anspruch 96,
dadurch gekennzeichnet,
daß die Abstreifvorrichtung derart ausgebildet ist, daß sie einerseits das Eindringen von Schmutzteilchen zwischen Führungswagen (12) und Führungsschiene (10) verhindert und andererseits die Schmiermitteldosage der Laufbahnen im wesentlichen auf die jeweilige axiale Länge des Führungswagens (12) beschränkt.

## Claims

1. Linear guide device comprising a guide rail (10; 110) with an axis (Ax) and at least one track (10c; 110k) and at least one guide carriage (12; 112) with at least one runner element (12a; 116a) which, in an operating condition, is guided on this track (10c; 110k), wherein a treating element carrier (14; 124) for at least one rail treating element (34; 140, 158), preferably a track treating element (34; 140, 158) being mounted on the guide carriage (12; 112), and wherein this rail treating element (34; 140, 158) being guided at the treating element carrier (14; 124) by guiding means (24; 136, 156) in a plane substantially at right angles to the axis and being pre-tensioned against the guide rail (10; 110),
characterized in that
the rail treating element (34; 140, 158) is secured in the guiding means (24; 136, 156) of the treating element carrier (14; 124) by loss preventive means (26c; 150, 152) which are independent from the guide rail (10; 110).

2. Device according to Claim 1, characterized in that the treating element carrier being formed as a lubricating element carrier (14) for a track lubricating element (34),
that this track lubricating element (34) is composed of a lubricant distributing and, with respect to the track (10c), snugly engagable material and
that this track lubricating element (34) communicates with a lubricant supply of the lubricating element carrier (14), wherein the track lubricating element (34) being captively housed in a lubricating element fitting (26) and the lubricating element fitting (26) being likewise captively housed in the lubricating element carrier (14) and being guided for movement in a direction substantially at right angles to the axis (Ax) and pre-tensioned towards the track (10c).

3. Device according to Claim 2, characterized in that the lubricant supply is accommodated outside the lubricating element fitting (26) but within the lubricating element carrier (14) and in that a lubricant connection (38) exists between the lubricant supply (40) and the track lubricating element (34) housed inside the lubricating element fitting (26).

4. Device according to Claim 3, characterized in that the lubricating element fitting (26) comprises a fitting housing (26) with a lateral surface (26a) substantially parallel with the guidance direction (24) of the lubricating element fitting (26), said fitting housing (26) having an end (30) open towards the track, the track lubricating element (34) projecting beyond this open end (30) towards the track (10c).

5. Device according to Claim 4, characterized in that the fitting housing (26) has at its end remote from the track an aperture which communicates with the lubricant supply (40).

6. Device according to Claim 4 or 5, characterized in that the fitting housing (26) extends through sealing means (66, 68) of the lubricating element carrier bearing substantially all round on the lateral surface (26a).

7. Device according to one of Claims 2 to 6, characterized in that the lubricating element fitting (26) has an abutment (26c) which, in conjunction with a mating abutment on the lubricating element carrier (14), restricts the mobility of the lubricating element fitting (26) towards the track.

8. Device according to Claim 7, characterized in that, if the lubricating element fitting (26) is constructed with a fitting housing (26), the abutment (26c) is formed by an outwardly projecting shoulder on the fitting housing (26) at its end remote from the track.

9. Device according to one of Claims 4 to 8, characterized in that at a midway location on its length extending in the guidance direction (24), the fitting housing (26) has a bracing member (28) which serves on the one hand as an abutment for the track lubricating element (34) which is introduced into the fitting housing (26) from the end close to the track and, on the other, as an abutment for a pre-tensioning spring (42) which is biased on the lubricating element carrier (14).

10. Device according to Claim 9, characterized in that the bracing element (28) is constructed with a centring mandrel (42a) for a coil thrust spring (42).

11. Device according to one of Claims 9 and 10, characterized in that the bracing member (28) only fills a part of the cross-section of the fitting housing (26) and leaves apertures (38) exposed for lubricant inside the fitting housing.

12. Device according to one of Claims 2 to 11, characterized in that the track lubricating element (34) is received inside the lubricating element fitting (26) by friction fit.

13. Device according to one of Claims 2 to 12, characterized in that the track lubricating element (34) consists of a porous lubricant-conductive material.

14. Device according to one of Claims 2 to 13, characterized in that the track lubricating element (34) is formed by a felt body.

15. Device according to one of Claims 13 and 14, characterized in that the track lubricating element (34) fills in substantially the entire cross-section of a lubricating element fitting (26) which is constructed as a fitting housing (26).

16. Device according to one of Claims 2 to 15, characterized in that the track lubricating element (34) is constructed with a capacity for conducting lubricant such that, in relation to the viscosity of whichever lubricant is used, there is substantially no loss of lubricant in the direction at right-angles to the guidance direction (24) of the track lubricating element.

17. Device according to one of Claims 2 to 16, characterized in that, if there are a plurality of tracks (10c) on the guide rail (10), there is provided on one and the same lubricating element carrier (14) in respect to each of these tracks (10c) at least one track lubricating element (34).

18. Device according to Claim 17, characterized in that on one and the same lubricating element carrier (14) there are two oppositely disposed track lubricating elements (34), their lubricating element fittings (26) having guidance directions virtually aligned with each other.

19. Device according to one of Claims 2 to 18, characterized in that the lubricating element carrier (14) is constructed as a plate-like structure which is mounted on an end face (12c) of the guide carriage (12) which is substantially at right-angles to the axis of the guide rail.

20. Device according to Claim 19, characterized in that the lubricating element carrier (14) has an inner peripheral contour (22) which is approximately adapted to the external cross-section of the guide rail (10) and rests on this, possibly through a seal which follows the contours, the at least one track lubricating element projecting beyond this surrounding contour towards the respective track.

21. Device according to one of Claims 2 to 20, characterized in that a lifetime filling of lubricants is contained inside the lubricating element carrier (14).

22. Device according to one of Claims 2 to 21, characterized in that the lubricant supply (40) is constructed with a lubricant connection (48) for a lubricant topping-up unit, preferably in the form of a lubricating nipple with a non-return action.

23. Device according to one of Claims 2 to 22, characterized in that, if a plurality of track lubricating elements (34) are arranged on a common lubricating element carrier (14), they communicate with a common lubricating supply (40, 46).

24. Device according to one of Claims 2 to 23, characterized in that the lubricating element carrier (14) is constructed as a flat housing which is, if desired, separably fixed as a separate component of the guide carriage on at least one end face (12c) of the guide carriage (12) which is substantially at right-angles to the axial direction (Ax) of the guide rail (10).

25. Device according to Claim 24, characterized in that the flat housing is assembled from two flat housing parts (16) which bear on each other like a sandwich.

26. Device according to Claim 25, characterized in that the flat housing parts (16) consist in each case of a main wall (18) and ribs (20) extending at right-angles thereto and, in the assembled state, are constructed in principle in a mirror symmetrical relationship in respect of a common central plane parallel with the main walls (18).

27. Device according to Claim 26, characterized in that the flat housing parts (16) are of identical construction.

28. Device according to Claim 27, characterized in that sealing and/or connecting means are disposed over only half the area of the flat housing parts (16) on head surfaces (20) of the ribs which bear on one another when the flat housing is in the assembled state, so that in the assembled state they are distributed over the entire area of contact between the flat housing parts (16) and complement each other.

29. Device according to one of Claims 25 to 28, characterized in that the flat housing parts (16) are welded, particularly ultrasonically, or are glued to one another.

30. Device according to one of Claims 2 to 29, characterized in that said lubricating element carrier (14) being contructed as a housing which closes off the lubricant supply (at 40) and lubricant conducting paths (46) outwardly in a sealing tight manner, said housing having a lubricant outlet only in the region of the at least one track lubricating element (34).

31. Device according to Claim 30, characterized in that the housing has a filling point (48) for filling with lubricant.

32. Device according to Claim 31, characterized in that the filling point (48) is constructed with a separable plug or a non-return nipple.

33. Device according to Claim 32, characterized in that the filling point (48) is disposed at a location which, in the operating condition, is situated above the lubricant supply (40).

34. Device according to one of Claims 30 to 32, characterized in that the housing consists of two housing parts which bear on each other through interposed sealing zones.

35. Device according to Claim 34, characterized in that the housing parts are traversed by fixing apertures (56) for mounting on the guide carriage (12) and in that the housing parts are sealed in respect of each other also in the area around these fixing apertures (56).

36. Device according to one of Claims 30 to 35, characterized in that half-housing chambers (66) are arranged on the housing parts (16) to accommodate respective halves of a gasket (68) which gasket (68) is traversed by the respective lubricating element fitting (26).

37. Device according to one of Claims 1 to 36, characterized in that the at least one roller element is formed by a runner roller (12a).

38. Device according to Claim 37, characterized in that the runner roller (12a) has a concave lateral surface which engages a matching profile forming the guide track.

39. Device according to Claim 38, characterized in that the profile (10c) is formed by a round profile bar of approximately circular cross-section which is fixed on a carrier rail.

40. Device according to one of Claims 1 to 39, characterized in that the guide carriage (12) engages around the guide rail (10) approximately in a U-shaped manner and in that at least one runner roller (12a) is disposed on each of two arms of the U-shaped guide carriage (12).

41. Device according to one of Claims 1 to 40, characterized in that the treating element carrier formed as a lubricating element carrier (14) comprises a tightly sealed closed housing which contains the lubricant supply (40) and in that this tightly sealed housing having as an outlet only an opening for a part of the at least one rail treating element formed as a track lubricating element (34), whereby this opening is substantially completely closed by the track lubricating element (34), so that an escape of lubricant is possible only by the permeation of lubricant within the track lubricating element (34).

42. Device according to one of Claims 1 - 41, characterized in that the rail treating element (34; 140, 158) is guided within the treating element carrier (14; 124) by rectilinear guide means (24; 136, 156).

43. Device according to one of Claims 1 to 42, characterized in that the rail treating element (34; 140, 158) has abutment means (26c; 150) which, in conjunction with counter-abutting means (152) on the treating element carrier (14; 124), limit the mobility of the rail treating element (24; 140, 158) which is allowed by the guide means (34; 136, 156).

44. Device according to one of Claims 1 to 43, characterized in that on one and the same treating element carrier (14; 24) there are guide means (24; 136, 156) for a plurality of rail treating elements (34; 140, 158).

45. Device according to Claim 44, characterized in that on one and the same treating element carrier (14; 124) there are two oppositely disposed rail treating elements (34; 140).

46. Device according to one of Claims 1 - 45, characterized in that the treating element carrier (14; 124) is combined with at least one rail treating element (34; 140, 158) to form a substantially completely pre-assembled component unit and in that there are provided on this component unit fixing means (56; 130) which provide for mounting on the guide carriage (12; 112).

47. Device according to one of Claims 1 - 46, characterized in that the treating element carrier (14; 124) is constructed with a substantially flat bearing surface for mounting on an end face of the guide carriage (12; 112) which is substantially at right-angles to the axis (Ax) of the guide carriage (12; 112) and in that the treating element carrier (14; 124) is provided with fixing holes (56; 130) extending substantially at right-angles to the bearing surface and which make it possible to fix the component unit on the end face of the guide carriage (12; 112) by means of fixing bolts (122) which pass through the component unit and engage the guide carriage (12; 112).

48. Device according to one of Claims 1 - 47, characterized in that the treating element carrier (14; 124) is constructed as a substantially plane parallel flat member.

49. Device according to one of Claims 1 - 48, characterized in that the treating element carrier (14; 124) is constructed as a housing, the guide means (24; 136, 156) for the at least one rail treating element (34; 140, 158) being accommodated inside this housing (14; 124).

50. Device according to one of Claims 1 - 49, characterized in that the treating element carrier (14; 124) is constructed as a substantially plane parallel flat housing.

51. Device according to one of Claims 1 - 50, characterized in that the treating element carrier (14; 124) consists of two carrier parts (16; 126, 128) which bear on each other like a sandwich.

52. Device according to Claim 51, characterized in that the guide means (136, 156) are disposed in the region of contact surfaces on the sandwiched carrier parts (126, 128), particularly in such a way that the at least one rail treating element (140, 158) and pre-tensioning means (144) associated with it, after insertion in guide means (136, 156) of one carrier part (126), are secured against separation from the treating element carrier (124) by the juxtaposition of the contact surfaces of both carrier parts (126, 128) and by fixing of the two carrier parts (126, 128) to each other.

53. Device according to Claim 51 or 52, characterized in that the two carrier parts (16; 126, 128) are connected to each other by welding, particularly ultrasonic welding, or gluing or screwing or snap-action inter-engagement.

54. Device according to one of Claims 1 - 53, characterized in that the guide carriage (12; 112), viewed in the longitudinal direction of the axis (Ax) is of substantially U-shaped construction and has a web portion (112f) close to a head surface (110h) of the guide rail (10; 110) and two flange portions (112g) each of which is close to a lateral surface (110f) of the guide rail (10; 110).

55. Device according to Claim 54, characterized in that the U-shaped guide carriage (12; 112) is guided by systems of respective rolling means (12a; 116, 118) between the two flange areas (112g) and the respectively associated lateral surface (110f) of the guide rail (10; 110).

56. Device according to Claim 55, characterized in that the rolling means systems (12a; 116, 118) are mounted on the guide carriage (12; 112) and are in rolling engagement with tracks (10c; 110k) on the two lateral surfaces (10; 110f) of the guide rail (110).

57. Device according to Claim 56, characterized in that the rolling means systems are constituted by rollers (12a) mounted individually on the guide carriage (12) and the peripheral surfaces of which are in rolling engagement with tracks (10c).

58. Device according to Claim 56, characterized in that the rolling means systems (116, 118) are constituted by endless rows of rolling bodies (116, 118) guided on the guide carriage (112).

59. Device according to one of Claims 1 - 58, characterized in that the rail treating element is constructed as a wiping element which wipes off any dirt from the guide rail when the guide carriage is moving along the guide rail.

60. Device according to one of Claims 1 - 59, characterized in that, if the guide carriage (12; 112) is of U-shaped construction, the treating element carrier (14; 124) is likewise U-shaped, having a web part (124f) opposite a head face (110h) of the guide rail (10; 110) and with flange parts (124g) opposite lateral surfaces (110f) of the guide rail (10; 110).

61. Device according to Claim 60, characterized in that in each of the flange parts (124g) there is a rail treating element (34; 140) for engagement with a respective associated lateral surface (110f).

62. Device according to one of Claims 1 to 61, characterized in that a treating element carrier (14; 124) is mounted on each of two end faces (12c; 112k) of the guide carriage (12; 112) which are remote from each other in the axial direction.

63. Device according to one of Claims 1 - 62, characterized in that the rail treating element (140, 158) is constructed as a scraper element for scraping off the guide rail (110) any impurities (167) which may be clinging to it.

64. Device according to one of Claims 1 - 63, characterized in that the at least one rail treating element (140, 158), when the guide rail profile is viewed in the axial direction (Ax) of the guide rail (110), treatingly acts on the guide rail (110) beyond an associated track (110k).

65. Device according to Claim 64, characterized in that the entire profile of the guide rail (110), at least within a part of the profile covered by a guide carriage (112), is exposed to the action of rail treating elements (140, 158).

66. Device according to one of Claims 1 - 65, wherein at least two rail treating elements (140, 158) are disposed on the guide carriage (112) and are adapted for movement in a plane substantially at right-angles to the axis and are pre-tensioned against the guide rail (110) so that each of them has a bearing edge (142, 160) resting on a part of the periphery of the guide rail profile, characterized in that
the bearing edges (142, 160) of the at least two rail treating elements (140, 158) mutually overlapping in the peripheral direction of the profile.

67. Device according to one of Claims 1 to 66, characterized in that, if the guide carriage (112) is U-shaped with a web portion (112f) opposite a head surface (110h) of the guide rail (110) and two flange portions (112g) each opposite a lateral surface (110f) of the guide rail (110) there is associated with each of the flange areas (112g) a rail treating element (140) for a lateral surface (110f) of the guide rail (110) and in that there is associated with the web portion (112f) a rail treating element (158) for the head surface (110h) of the guide rail (110).

68. Device according to Claim 67, characterized in that both rail treating elements (140) associated with the lateral surfaces (110f) overlap in the peripheral direction of a guide rail profile the rail treating element (158) associated with the head surface (110h).

69. Device according to one of Claims 1 - 68, characterized in that with a sandwich-like assembly of the treating element carrier (14; 124) from two carrier parts (16; 126, 128) having contacting surfaces at right-angles to the axis (Ax), one (16; 126) of these carrier parts (16; 126, 128) is in its contacting surface constructed in relief fashion with a guide recess (24; 136, 156) for the at least one rail treating element (324; 140, 158), this guide recess (34; 136, 156) being closed by the respective other carrier part (16; 128).

70. Device according to Claim 69, characterized in that the guide recess (136, 156) is formed by a main surface (136a) at right-angles to the axis (Ax) and two mutually parallel marginal surfaces (136b), and the respective other carrier part (128) forming a further main surface at right-angles to the axis (Ax).

71. Device according to Claim 70, characterized in that to safeguard the respective rail treating element (140, 158) from escaping from the guide recess (136, 156), the loss preventive means (150, 152) are provided on one of the main surfaces (136a, 156a).

72. Device according to Claim 71, characterized in that the loss preventive means (150, 152) are constructed as bolt-and-elongate hole securing means.

73. Device according to Claim 72, characterized in that the loss preventive means (150, 152) consist of an elongate hole (150) in the respective rail treating element (140, 158) and an elongate hole engaging bolt (152) on a carrier part (126), the elongate hole engaging bolt (152) preferably being constructed in one piece on the respective carrier part (126).

74. Device according to one of Claims 1 - 73, characterized in that in the range of the guiding means (24; 136, 156) is accomodated a pre-tensioning means (42; 144) separately produced from the respective rail treating element (34; 140, 158) for pre-tensioning the rail treating contour (36) or edge (142, 160) associated to the respective rail treating element (34; 140, 158) towards the respective associated guide rail (10; 110).

75. Device according to one of Claims 1 - 74, characterized in that pre-tensioning means for pre-tensioning the rail treating element are formed by at least one coil thrust spring (42).

76. Device according to one of Claims 1 - 75, characterized in that pre-tensioning means (144) for pre-tensioning the rail treating element (140, 158) comprising a pre-tensioning member (144) which at least on its surface consists of an elastomeric material (144b) and which, by the action of abutment means (150, 152) or by resting of the rail treating element (140, 158) against the guide rail (110) becomes clamped between a counter-abutment surface (148) on the guide carriage (112) and an engagement surface (146) of the rail treating element (140, 158) with an elastic deformation of the elastomeric material (144b).

77. Device according to Claim 76, characterized in that the pre-tensioning body (144) comprises an elastomeric ring (144b), preferably constructed as an O-ring.

78. Device according to Claim 77, characterized in that the elastomeric ring (144b) retains, in the center thereof, a circular disc body (144a).

79. Device according to one of Claims 1 - 78, characterized in that the at least one rail treating element (140, 158) is guided in a disc-shaped guide chamber (136, 156) substantially at right-angles to the axis of the guide rail (110) and in that in this disc-shaped guide chamber (136, 156) there is inserted between an end face (148) of the rail treating element (140) which is remote from the rail and a boundary surface (136c) of the disc-shaped guide chamber (136) which is opposite this end face (148) which is remote from the rail at least one pre-tensioning member (144) which is guided between two main surfaces (136a, 128) of the disc-shaped guide chamber (136) and is secured in the working position by recesses (146, 149) in the end face (148) of the rail treating element (140) which is remote from the rail and/or the boundary surface (136c) in the disc-shaped guide chamber (136).

80. Device according to one of Claims 1 + 42 - 79, characterized in that said rail treating element (140, 158) being disc-shaped and being disposed substantially at right angles to the axis (Ax) of the guide rail (110) and having on an edge close to the guide rail (110) a scraping edge (142, 160) which is substantially rigid in relation to the guide carriage (112) in the axial direction (Ax) of the guide rail (110).

81. Device according to Claim 80, characterized in that the scraping edge (142) is disposed in the region of an end face (140y) of the disc-shaped rail treating element (140) which is remote from the guide carriage (112).

82. Device according to Claim 80 or 81, characterized in that adjacent the scraping edge (142') there is on the rail treating element (140) a shovel-like surface (168) which is directed away from the carriage (112).

83. Device according to Claim 82, characterized in that the shovel-like surface (168) is constructed on a projection of the disc-shaped rail treating element (140') which is directed away from the guide carriage (112).

84. Device according to Claim 82, characterized in that the shovel-like surface (168") is formed by a notch (170") in the disc-shaped rail treating element (140").

85. Device according to one of Claims 80 - 84, characterized in that the scraping edge (142") is mounted on a disc structure of the rail treating element (140") in such a way as to be resiliently deflectable in a direction (C) at right-angles to the axial direction (Ax) of the guide rail (110).

86. Device according to one of Claims 80 - 85, characterized in that of two rail treating elements (140, 158) which overlap each other in a peripheral direction of a profile of the guide rail (110), the one (158) is provided with a marginal recess (164) which is partially filled by the respective other (140).

87. Device according to one of Claims 1 - 86, characterized in that the treating element carrier (14; 124) is formed by at least one moulding (16; 126, 128) which is injection moulded or cast from a synthetic plastics material.

88. Device according to one of Claims 1 - 87, characterized in that the at least one rail treating element (34; 140, 158) is produced from metal such as steel, brass, cast metal or a polymeric material or a felt.

89. Device according to one of Claims 1 - 88, characterized in that the guide rail (110) has at least one lateral surface (110f) with a cross-sectionally trapezoidal profile depression, the flanks of this profile depression forming tracks (110k) each of which is for an endless circuit of rollers (116, 118) and in that on the at least one rail treating element (140) there is a correspondingly trapezoidal projection the flanks (142) of which are intended to cooperate with said tracks (110k) of said depression.

90. Device according to one of Claims 66 - 89, characterized in that the rail treating elements (140, 158) bear on each other in the area of overlap (U).

91. Device according to one of Claims 66 - 90, characterized in that the rail treating elements (140, 158) bear on guide surfaces (136a, 156a) which are substantially at right-angles to the axial direction (Ax) and which are offset in respect of each other in the axial direction (Ax) of the guide rail (110).

92. Device according to Claim 91, characterized in that the guide surfaces (136a, 156a) which are offset in respect of each other in an axial direction and which are substantially at right-angles to the axial direction are formed on a first (126) of two carrier parts (126, 128) which bear flat on each other and in that the rail treating elements (140, 158), corresponding to the offset of the guide surfaces (136a, 156a), are of different thickness measured in the axial direction and in that in the thicker (158) of the two rail treating elements (140, 158) there is a marginal recess (164) approximately corresponding to the thickness of the thinner (140) of the two rail treating elements (140, 158) and in that the thinner (140) of the two rail treating elements (140, 158) has a marginal portion (166) which engages the marginal recess (164).

93. Device according to Claim 92, characterized in that the second (128) of the two carrier parts (126, 128) which bear flat on each other has a common flat surface bearing on the two rail treating elements (140, 158).

94. Device according to one of Claims 66 - 93, characterized in that at least one (140) of the rail treating elements (140, 158) has in a plane at right-angles to the axial direction (Ax) a guidance clearance which, not withstanding the guidance accuracy of guide means (136b) acting in the respective orthogonal plane, allows a self-adaptation of the bearing edge (142) to an associated part of a profile of the guide rail (110).

95. Device according to one of Claims 1 - 94, characterized by separable holding means (170) provided on the guide carriage (112) for the rail treating element (140, 158) which maintain the rail treating element (140, 158) in an inoperative position prior to application of the guide carriage (112) on the guide rail (110), i.e. in a position in which the rail treating element (140, 158), on positionally correct approximation of the guide carriage (112) to an end of the guide rail (110) in the direction of the axis (Ax) of the guide rail (110), remains disengaged from the guide rail (110).

96. Device according to one of Claims 1 - 41, characterized in that on the treating element carrier (14) formed as a lubricating element carrier an inner circumferential contour (22), i.e. an circumferential contour (22) facing towards the guide rail, is arranged which - if desired through a gasket - abuts on the guide rail (10) and acts as a wiping device.

97. Device according to Claim 96, characterized in that the wiping device is constructed such that it prevents the penetration of dirt particles between the guide carrier (12) and the guide rail (10), at the one hand, and restricts the lubricant dosage of the tracks substantially to the respective axial length of the guide carriage (12), on the other hand.

## Revendications

1. Dispositif de guidage linéaire, comprenant un rail de guidage (10 ; 110) avec un axe (Aₓ) et au moins une voie de roulement (10c ; 110k) ainsi qu'au moins un chariot de guidage (12 ; 112) avec au moins un élément de roulement (12a ; 116a) guidé à l'état de fonctionnement sur cette voie de roulement (10c ; 110k), un support d'élément de traitement (14 ; 124) étant monté sur le chariot de guidage (12 ; 112) pour au moins un élément de traitement de rail (34; 140, 158) en particulier un élément de traitement de voie de roulement (34 ; 140, 158) et cet élément de traitement de rail (34 ; 140, 158) étant guidé par des moyens de guidage (24 ; 136, 156) sur le support d'élément de traitement (14 ; 124), dans un plan sensiblement normal à l'axe et étant précontraint contre le rail de guidage (10 ; 110),
caractérisé
en ce que l'élément de traitement de rail (34 ; 140, 158) est bloqué dans les moyens de guidage (24 ; 136, 156) du support d'élément de traitement (14 ; 124) par des moyens de protection contre la perte (26c ; 150, 152), qui sont indépendants du rail de guidage (10 ; 110).

2. Dispositif selon la revendication 1,
caractérisé
en ce que le support d'élément de traitement est réalisé en tant que support d'élément de lubrification (14) pour un élément de lubrification de voie de roulement (34), en ce que cet élément de lubrification de voie de roulement (34) est constitué d'un matériau distribuant un lubrifiant et pouvant épouser la forme de la voie de roulement et en ce que cet élément de lubrification de voie de roulement (34) est en liaison avec une réserve de lubrifiant du support d'élément de lubrification (14), l'élément de lubrification de voie de roulement (34) étant logé imperdable dans une monture d'élément de lubrification (26) et la monture d'élément de lubrification (26) étant également logée imperdable dans le support d'élément de lubrification (14) et étant guidée mobile dans une direction sensiblement orthogonale à l'axe (Aₓ) et précontrainte dans la direction de la voie de roulement (10c).

3. Dispositif selon la revendication 2,
caractérisé
en ce que la réserve de lubrifiant est logée à l'extérieur de la monture d'élément de lubrification (26), mais à l'intérieur du support d'élément de lubrification (14) et en ce qu'il existe une liaison (38) entre la réserve de lubrifiant (40) et l'élément de lubrification de voie de roulement (34) logée à l'intérieur de la monture d'élément de lubrification (26).

4. Dispositif selon la revendication 3,
caractérisé
en ce que la monture d'élément de lubrification (26) présente un boîtier de monture (26) avec une surface d'enveloppe (26a) sensiblement parallèle à la direction de guidage (24) de la monture d'élément de lubrification (26), ce boîtier de monture (26) présentant une extrémité (30) ouverte vers la voie de roulement et l'élément de lubrification de voie de roulement (34) dépassant de cette extrémité (30) ouverte en direction de la voie de roulement (10c).

5. Dispositif selon la revendication 4,
caractérisé
en ce que le boîtier de monture (26) présente, à son extrémité éloignée de la voie de roulement, une ouverture qui communique avec la réserve de lubrifiant (40).

6. Dispositif selon la revendication 4 ou 5,
caractérisé
en ce que le boîtier de monture (26) est guidé à travers un élément d'étanchéité (66, 68) du support d'élément de lubrification, s'appliquant contre la surface d'enveloppe (26a) du boîtier (26), sensiblement tout autour.

7. Dispositif selon l'une des revendications 2 à 6,
caractérisé
en ce que la monture d'élément de lubrification (26) présente une butée (26c), qui, en coopération avec une contrebutée du support d'élément de lubrification (14), limite la mobilité de la monture d'élément de lubrification (26) dans la direction de la voie de roulement.

8. Dispositif selon la revendication 7,
caractérisé
en ce que dans le cas où la monture d'élément de lubrification (26) est réalisée avec un boîtier de monture (26), la butée (26c) est constituée par un épaulement, dépassant vers l'extérieur, du boîtier de monture (26), à son extrémité éloignée de la voie de roulement.

9. Dispositif selon l'une des revendications 4 à 8,
caractérisé
en ce que le boîtier de monture (26) présente, au milieu de sa longueur s'étendant dans sa direction de guidage (24), un organe d'appui (28), qui sert d'une part de butée pour l'élément de lubrification de voie de roulement (34) introduit, à partir de l'extrémité éloignée de la voie de roulement, dans le boîtier de monture (26) et d'autre part, de butée pour un ressort de précontrainte (42) qui est soutenu contre le support d'élément de lubrification.

10. Dispositif selon la revendication 9,
caractérisé
en ce que l'organe d'appui (28) est réalisé avec une broche de centrage (42a) pour un ressort de compression hélicoïdal (42).

11. Dispositif selon l'une des revendications 9 et 10,
caractérisé
en ce que l'organe d'appui (28) ne remplit qu'une partie de la section transversale du boîtier de monture (26) et dégage des passages (38) pour le lubrifiant, à l'intérieur du boîtier de monture.

12. Dispositif selon l'une des revendications 2 à 11,
caractérisé
en ce que l'élément de lubrification de voie de roulement (34) est logé avec ajustement par friction à l'intérieur de la monture d'élément de lubrification (26).

13. Dispositif selon l'une des revendications 2 à 12,
caractérisé
en ce que l'élément de lubrification de voie de roulement (34) est constitué en un matériau poreux, pouvant conduire un lubrifiant.

14. Dispositif selon l'une des revendications 2 à 13,
caractérisé
en ce que l'élément de lubrification de voie de roulement (34) est constitué par un corps en feutre.

15. Dispositif selon l'une des revendications 13 et 14,
caractérisé
en ce que l'élément de lubrification de voie de roulement (34) dans un monture d'élément de lubrification (26), réalisée en tant que boîtier formant monture (26), remplit sensiblement toute la section transversale du boîtier.

16. Dispositif selon l'une des revendications 2 à 15,
caractérisé
en ce que l'élément de lubrification de voie de roulement (34) est réalisé avec une capacité de conduction de lubrifiant, rapportée à la viscosité du lubrifiant utilisé dans chaque cas, telle qu'il ne se produit pratiquement aucune perte de lubrifiant dans une direction perpendiculaire à la direction de guidage (24) de l'élément de lubrification de voie de roulement.

17. Dispositif selon l'une des revendications 2 à 16,
caractérisé
en ce qu'en présence de plusieurs voies de roulement (10c) sur le rail de guidage (10), il est prévu au moins un élément de lubrification de voie de roulement (34) sur un seul et même support d'élément de lubrification (14), affecté à chacune de ces voies de roulement (10c).

18. Dispositif selon la revendication 17,
caractérisé
en ce que sur un seul et même support d'élément de lubrification (14) sont prévus deux éléments de lubrification de voie de roulement (34) se faisant face l'un l'autre, leurs montures d'élément de lubrification (26) présentant approximativement des directions de guidage alignées entre elles.

19. Dispositif selon l'une des revendications 2 à 18,
caractérisé
en ce que le support d'élément de lubrification (14) est réalisé en tant que structure en forme de plaque, qui est montée sur une face frontale (12c) du chariot de guidage (12), sensiblement orthogonale à l'axe du rail de guidage.

20. Dispositif selon la revendication 19,
caractérisé
en ce que le support d'élément de lubrification (14) présente un contour périphérique intérieur (22), qui est approximativement adapté à la section transversale extérieure du rail de guidage (10) et qui s'applique contre celui-ci, éventuellement par une garniture d'étanchéité qui suit le contour, le ou les élément(s) d'étanchéité de voie de roulement dépassant de ce contour périphérique en direction de la voie de roulement respective.

21. Dispositif selon l'une des revendications 2 à 20,
caractérisé
en ce que le support d'élément de lubrification (14) contient un remplissage à vie de lubrifiant.

22. Dispositif selon l'une des revendications 2 à 21,
caractérisé
en ce que la réserve de lubrifiant (40) présente un raccord de lubrifiant (48) pour un appareil de remise à niveau de lubrifiant, de préférence sous la forme d'un raccord fileté de lubrifiant avec effet anti-retour.

23. Dispositif selon l'une des revendications 2 à 22,
caractérisé
en ce que dans le cas où sont prévus plusieurs éléments de lubrification de voie de roulement (34) sur un support d'élément de lubrification (14) commun, ceux-ci communiquent avec une réserve de lubrifiant (40, 46) commune.

24. Dispositif selon l'une des revendications 2 à 23,
caractérisé
en ce que le support d'élément de lubrification (14) est réalisé en tant que boîtier plat, qui est fixé - de manière non permanente si on le souhaite - à au moins une face terminale (12c) du chariot de guidage (12), orthogonale à la direction de l'axe (Aₓ) du rail de guidage (10), en tant que composant séparé du chariot de guidage.

25. Dispositif selon la revendication 24,
caractérisé
en ce que le boîtier plat est composé de deux parties de boîtier plat (16) s'appliquant l'une contre l'autre en sandwich.

26. Dispositif selon la revendication 25,
caractérisé
en ce que les parties de boîtier plat (16) sont formées chacune par une paroi principale (18) et par des nervures (20) se dressant orthogonalement au-dessus de cette paroi principale (18) lesquelles à l'état assemblé sont en principe dans une symétrie en miroir par rapport à un plan médian commun parallèle aux parois principales (18).

27. Dispositif selon la revendication 26,
caractérisé
en ce que les parties de boîtier plat (16) sont formées à l'identique.

28. Dispositif selon la revendication 27,
caractérisé
en ce que sur des surfaces de tête (20) des nervures, s'appliquant l'une contre l'autre à l'état assemblé du boîtier plat, des moyens d'étanchéité et/ou de liaison ne sont disposés que sur une moitié de zone des parties de boîtier plat (16), de manière qu'à l'état assemblé, ceux-ci se complètent répartis sur toute la surface de contact des parties de boîtier plat (16).

29. Dispositif selon l'une des revendications 25 à 28,
caractérisé
en ce que les parties de boîtier plat (16) sont soudées entre elles, en particulier soudées par ultrasons ou collées.

30. Dispositif selon l'une des revendications 2 à 29,
caractérisé
en ce que le support d'élément de lubrification (14) est réalisé en tant que boîtier fermant de manière étanche vers l'extérieur la réserve de lubrifiant (en 40) et les trajets de conduite de lubrifiant (46), qui présentent une sortie de lubrifiant uniquement dans la région de l'élément ou des éléments de lubrification de voie de roulement (34).

31. Dispositif selon la revendication 30,
caractérisé
en ce que le boîtier présente un emplacement de remplissage (48) pour l'introduction de lubrifiant.

32. Dispositif selon la revendication 31,
caractérisé
en ce que le point de remplissage (48) est réalisé avec une fermeture non permanente ou un nipple anti-retour.

33. Dispositif selon la revendication 32,
caractérisé
en ce que le point de remplissage (48) est disposé en un endroit situé comme il se doit pour le fonctionnement, au-dessus de la réserve de lubrifiant (40).

34. Dispositif selon l'une des revendications 30 à 32,
caractérisé
en ce que le boîtier est constitué de deux parties s'appliquant l'une contre l'autre par l'intermédiaire de zones d'étanchéité.

35. Dispositif selon la revendication 34,
caractérisé
en ce que les parties de boîtier sont traversées par des ouvertures de fixation (56) pour la fixation au chariot de guidage (12) et en ce que les parties de boîtier sont aussi rendues étanches l'une par rapport à l'autre dans la zone entourant ces ouvertures de fixation (56).

36. Dispositif selon l'une des revendications 30 à 35,
caractérisé
en ce que sur les parties de boîtier (16) sont prévues des demi-chambres formant logements (66) destinées à recevoir chacune la moitié d'une bague d'étanchéité (68), laquelle bague d'étanchéité (68) est traversée par la monture d'élément de lubrification (26) correspondante.

37. Dispositif selon l'une des revendications 1 à 36,
caractérisé
en ce que le ou les éléments de roulement est (sont) formé(s) par un galet de roulement (12a).

38. Dispositif selon la revendication 37,
caractérisé
en ce que le galet de roulement (12a) présente une surface d'enveloppe concave, qui est en prise avec un profilé complémentaire, formant la voie de guidage.

39. Dispositif selon la revendication 38,
caractérisé
en ce que le profilé (10c) est formé par une barre profilée ronde de section approximativement circulaire, qui est fixé sur un rail de support.

40. Dispositif selon l'une des revendications 1 à 39,
caractérisé
en ce que le chariot de guidage (12) entoure approximativement en U le rail de guidage (10) et en ce que sur chacune des deux branches du chariot de guidage (12) l'entourant en U, est monté au moins un galet de roulement (12a).

41. Dispositif selon l'une des revendications 1 à 40,
caractérisé
en ce que le support d'élément de traitement, réalisé en tant que support d'élément de lubrification (14), comprend un boîtier hermétiquement étanche, qui contient la réserve de lubrifiant (40) et en ce que ce boîtier hermétiquement étanche présente en tant que sortie, uniquement un passage pour une partie de l'élément ou des éléments de traitement de rail réalisé en tant qu'élément de lubrification de voie de roulement (34), ce passage étant presque totalement fermé par l'élément de lubrification de voie de roulement (34), de sorte qu'une sortie de lubrifiant est possible uniquement par perméation de lubrifiant à l'intérieur de l'élément de lubrification de voie de roulement (34).

42. Dispositif selon l'une des revendications 1 à 41,
caractérisé
en ce que l'élément de traitement de rail (34 ; 140, 158) est guidé à l'intérieur du support d'élément de traitement (14 ; 124) par des moyens de guidage linéaire (24 ; 136, 156).

43. Dispositif selon l'une des revendications 1 à 42,
caractérisé
en ce que l'élément de traitement de rail (34 ; 140, 158) présente des moyens de butée (26c ; 150), qui en coopération avec des moyens de contrebutée (152) du support d'élément de traitement (14 ; 124), limitent la mobilité de l'élément de traitement de rail (34 ; 140, 158) autorisée par les moyens de guidage (24 ; 136, 256).

44. Dispositif selon l'une des revendications 1 à 43,
caractérisé
en ce que sur un seul et même support d'élément de traitement (14 ; 124) sont prévus des moyens de guidage (24 ; 136, 156) pour une pluralité d'éléments de traitement de rail (34 ; 140, 158).

45. Dispositif selon la revendication 44,
caractérisé
en ce que sur un seul et même support d'élément de traitement (14 ; 124) sont prévus deux éléments de traitement de rail (34 ; 140) opposés l'un à l'autre.

46. Dispositif selon l'une des revendications 1 à 45,
caractérisé
en ce que le support d'élément de traitement (14 ; 124) est réuni avec au moins un élément de traitement de rail (34 ; 140, 158) en une unité de construction sensiblement entièrement prémontée et en ce que sur cette unité de construction sont prévus des moyens de fixation (56 ; 130), qui autorisent la fixation au chariot de guidage (12 ; 112).

47. Dispositif selon l'une des revendications 1 à 46,
caractérisé
en ce que le support d'élément de traitement (14 ; 124) est réalisé avec une surface d'application sensiblement plane pour son montage sur une face frontale du chariot de guidage (12 ; 112), sensiblement orthogonale à l'axe (Aₓ) du chariot de guidage (12 ; 112) et en ce que le support d'élément de traitement (14 ; 124) est pourvu de trous de fixation (56 ; 130) s'étendant sensiblement orthogonalement à la surface d'application, lesquels autorisent la fixation de l'unité de construction à la face frontale du chariot de guidage (12 ; 112) au moyen de boulons de fixation (122) traversant l'unité de construction et s'engageant dans le chariot de guidage (12 ; 112);

48. Dispositif selon l'une des revendications 1 à 47,
caractérisé
en ce que le support d'élément de traitement (14 ; 124) est réalisé en tant que corps plat à faces sensiblement planes et parallèles.

49. Dispositif selon l'une des revendications 1 à 48,
caractérisé
en ce que le support d'élément de traitement (14 ; 124) est réalisé en tant que boîtier, à l'intérieur de ce boîtier (14 ; 124) étant logés les moyens de guidage (24 ; 136, 156) pour le ou les élément(s) de traitement de rail (34 ; 140, 158).

50. Dispositif selon l'une des revendications 1 à 49,
caractérisé
en ce que le support d'élément de traitement (14 ; 124) est réalisé en tant que boîtier plat à faces sensiblement planes et parallèles.

51. Dispositif selon l'une des revendications 1 à 50,
caractérisé
en ce que le support d'élément de traitement (14 ; 124) est composé de deux parties de support (16 ; 126, 128) s'appliquant l'une contre l'autre en sandwich.

52. Dispositif selon la revendication 51,
caractérisé
en ce que les moyens de guidage (136, 156) sont disposés dans la région de surfaces de contact des parties de support (126, 128) s'appliquant l'une contre l'autre en sandwich, en particulier de manière que le ou les élément(s) de traitement de rail (140, 158) et des moyens de précontrainte (144) en faisant partie, après mise en place dans des moyens de guidage (136, 156) d'une partie de support (126), sont protégés contre une séparation d'avec le support d'élément de traitement (124), par application les unes contre les autres des surfaces de contact des deux parties de support (126, 128) et par fixation des deux parties de support (126, 128) l'une à l'autre.

53. Dispositif selon la revendication 51 ou 52,
caractérisé
en ce que les deux parties de support (16 ; 126, 128) sont assemblées entre elles par soudage, en particulier par soudage par ultrasons ou par collage ou vissage ou encliquetage l'une dans l'autre.

54. Dispositif selon l'une des revendications 1 à 53,
caractérisé
en ce que le chariot de guidage (12 ; 112), considéré dans la direction longitudinale de l'axe (Aₓ), a sensiblement une forme en U avec une zone de dos (112f) située à proximité d'une surface de tête (110h) du rail de guidage (10 ; 110) et avec deux zones de branche (112g) situées chacune à proximité d'une face latérale (110f) du rail de guidage (10 ; 110).

55. Dispositif selon la revendication 54,
caractérisé
en ce que le chariot de guidage (12 ; 112) en U est guidé par un système de moyens roulants (12a ; 116, 118) entre les deux zones de branche (112g) et la face latérale (110f) correspondante.

56. Dispositif selon la revendication 55,
caractérisé
en ce que les systèmes de moyens roulants (12a, 116, 118) sont montés sur le chariot de guidage (12 ; 112) et sont en engagement roulant avec des voies de roulement (10c ; 110k) sur les deux faces latérales (110f) du rail de guidage (10 ; 110).

57. Dispositif selon la revendication 56,
caractérisé
en ce que les systèmes de moyens roulants sont constitués par des rouleaux (12a) montés individuellement sur le chariot de guidage (12), qui sont en engagement roulant sur leurs surfaces périphériques avec des voies de roulement (10c).

58. Dispositif selon la revendication 56,
caractérisé
en ce que les systèmes de moyens roulants (116, 118) sont constitués par des rangées de corps de roulement (116, 118) sans fin, guidées sur le chariot de guidage (112).

59. Dispositif selon l'une des revendications 1 à 58,
caractérisé
en ce que l'élément de traitement de rail est réalisé en tant qu'élément de raclage, qui enlève par raclage d'éventuelles impuretés du rail de guidage, lorsque le chariot de guidage se déplace le long du rail de guidage.

60. Dispositif selon l'une des revendications 1 à 59,
caractérisé
en ce que dans le cas où le chariot de guidage (12 ; 112) est réalisé en forme de U, le support d'élément de traitement (14 ; 124) est également formé en U avec une partie formant dos (124f) faisant face à une surface de tête (110h) du rail de guidage (10 ; 110) et avec des parties formant branches (124g) faisant face à des surfaces latérales (110f) du rail de guidage (10 ; 110).

61. Dispositif selon la revendication 60,
caractérisé
en ce que dans chacune des parties formant branches (124g) est prévu un élément de traitement de rail (34 ; 140) destiné à venir en prise avec la surface latérale (110f) correspondante.

62. Dispositif selon l'une des revendications 1 à 61,
caractérisé
en ce que sur deux faces frontales (12c ; 112k) du chariot de guidage (12 ; 112), éloignées l'une de l'autre dans la direction axiale, est monté respectivement un support d'élément de traitement (14 ; 124).

63. Dispositif selon l'une des revendications 1 à 62,
caractérisé
en ce que l'élément de traitement de rail (140, 158) est formé en tant qu'élément de raclage pour enlever par raclage d'éventuelles impuretés (167) adhérant au rail de guidage (110).

64. Dispositif selon l'une des revendications 1 à 63,
caractérisé
en ce que le ou les élément(s) de traitement de rail (140, 158) exerce(nt) un effet de traitement sur le rail de guidage (110), au-delà d'une voie de roulement (110k) correspondante, lorsque l'on considère le profilé de rail de guidage dans la direction de l'axe (Aₓ) du rail de guidage (110).

65. Dispositif selon la revendication 64,
caractérisé
en ce que l'ensemble du profilé du rail de guidage (110) est soumis à l'action d'éléments de traitement de rail (140, 158), au moins à l'intérieur de la zone du profilé couverte par un chariot de guidage (112).

66. Dispositif selon l'une des revendications 1 à 65, dans lequel au moins deux éléments de traitement de rail (140, 158) sont disposés mobiles dans un plan sensiblement orthogonal à l'axe et sont précontraints contre le rail de guidage (110), de manière à s'appliquer chacun par une arête d'application (142, 160) contre une section périphérique du profilé de rail de guidage,
caractérisé
en ce que les arêtes d'application (142, 160) des éléments de traitement de rail (140, 158) au moins au nombre de deux se chevauchent réciproquement dans le direction périphérique du profilé.

67. Dispositif selon l'une des revendications 1 à 66,
caractérisé
en ce que dans le cas où le chariot de guidage (112) est réalisé en U avec une zone de dos (112f) opposée à une surface de tête (110h) du rail de guidage (110) et avec deux zones de branche (112g) opposées chacune à une surface latérale (110f) du rail de guidage (110), à chacune des zones de branche (112g) est associé un élément de traitement de rail (140) pour une surface latérale (110f) du rail de guidage (110) et à la zone de dos (112f) un élément de traitement de rail (158) pour la surface de tête (110h) du rail de guidage (110).

68. Dispositif selon la revendication 67,
caractérisé
en ce que les deux éléments de traitement de rail (140), associés aux surfaces latérales (110f), se chevauchent avec l'élément de traitement de rail (158) affecté à la surface de tête (110h).

69. Dispositif selon l'une des revendications 1 à 68,
caractérisé
en ce que dans le cas d'une composition du genre sandwich du support d'élément de traitement (14 ; 124) à partir de deux parties de support (16 ; 126, 128) avec des surfaces de contact orthogonales à l'axe (Aₓ), l'une (16 ; 126) de ces parties de support (16 ; 126, 128) présente dans sa surface de contact un évidement de guidage (24 ; 136, 156) à la manière d'un relief pour le ou les éléments de traitement de rail (34 ; 140, 158), cet évidement de guidage (24 ; 136, 156) étant fermé par l'autre partie de support (16 ; 128).

70. Dispositif selon la revendication 69,
caractérisé
en ce que l'évidement de guidage (136, 156) est formé par une surface principale (136a) orthogonale à l'axe (Aₓ) et par respectivement deux surfaces de bordure (136a, parallèles entre elles, et l'autre partie de support (128) forme une autre surface principale orthogonale à l'axe (Aₓ).

71. Dispositif selon la revendication 70,
caractérisé
en ce que les moyens de protection contre la perte (150, 152) destinés à assurer chaque élément de rail (140, 158) contre une sortie de l'évidement de guidage (136, 156), sont prévus sur l'une des surfaces principales (136a, 156a).

72. Dispositif selon la revendication 71,
caractérisé
en ce que les moyens de protection contre la perte (150, 152) sont réalisés en tant que moyens de protection à boulon et trou oblong.

73. Dispositif selon la revendication 72,
caractérisé
en ce que les moyens de protection contre la perte (150, 152) sont formés par un trou oblong (150) de chaque élément de traitement de rail (140, 158) et par un boulon d'engagement dans un trou oblong (152) sur une partie de support (126), le boulon d'engagement dans un trou oblong (152) étant réalisé de préférence d'une seule pièce sur la partie de support (126) correspondante.

74. Dispositif selon l'une des revendications 1 à 73,
caractérisé
en ce que dans la zone des moyens de guidage (24 ; 136, 156) est logé un moyen de précontrainte (42 ; 144), réalisé séparément de l'élément de traitement de rail (34 ; 140, 158) correspondant, pour la précontrainte du contour (36) ou du bord (142, 160) de traitement de rail faisant partie de chaque élément de traitement de rail (34 ; 140, 158), contre le rail de guidage (10 ; 110) correspondant.

75. Dispositif selon l'une des revendications 1 à 74,
caractérisé
en ce que des moyens de précontrainte sont formés par au moins un ressort de compression hélicoïdal (42), pour la précontrainte de l'élément de traitement de rail.

76. Dispositif selon l'une des revendications 1 à 75,
caractérisé
en ce que des moyens de précontrainte (144), pour la précontrainte de l'élément de traitement de rail (140, 158), comprennent un corps de précontrainte (144) en matériau élastomère (144b), au moins à sa surface, qui est serré par l'effet de moyens de butée (150, 152) ou par l'application de l'élément de traitement de rail (140, 158) contre le rail de guidage (110), entre une surface de butée (148) du chariot de guidage (112) et une surface d'attaque (146) de l'élément de traitement de rail (140, 158), par déformation élastique du matériau élastomère (144b).

77. Dispositif selon la revendication 76,
caractérisé
en ce que le corps de précontrainte (144) présente une bague élastomère (144b), qui est formée de préférence en joint torique.

78. Dispositif selon la revendication 77,
caractérisé
en ce que le joint élastomère (144b) reçoit en son centre un corps à disque rond (144a).

79. Dispositif selon l'une des revendications 1 à 78,
caractérisé
en ce que le ou les élément(s) de traitement de rail (140, 158) est (sont) guidé(s) dans une chambre de guidage (136, 156) en forme de disque sensiblement orthogonale à l'axe du rail de guidage (110) et en ce que dans cette chambre de guidage (136, 156) en forme de disque, entre une face terminale (148) éloignée du rail de l'élément de traitement de rail (140) et une surface de délimitation (136c) opposée à cette face terminale (148) éloignée du rail, de la chambre de rail (136) en forme de disque, est placé au moins un corps de précontrainte (144), qui est bloqué en position de travail par des découpes (146, 149) dans la face terminale (148) éloignée du rail de l'élément de traitement de rail (140) ou/et de la surface de délimitation (136c) dans la chambre de guidage (136) en forme de disque.

80. Dispositif selon l'une des revendications 1 + 42 à 79,
caractérisé
en ce que l'élément de traitement de rail (140, 158) est en forme de disque et est disposé sensiblement orthogonalement à l'axe (Aₓ) du rail de guidage (110) et présente, sur un bord proche du rail de guidage (110), une arête de raclage (142, 160), qui est sensiblement rigide dans la direction de l'axe (Aₓ) du rail de guidage (110) par rapport au chariot de guidage (112).

81. Dispositif selon la revendication 80,
caractérisé
en ce que l'arête de raclage (142) est disposée dans la région d'une face terminale (140y) éloignée du chariot de guidage (112) de l'élément de traitement de rail (140) en forme de disque.

82. Dispositif selon la revendication 80 ou 81,
caractérisé
en ce qu'une surface en pale (168), s'éloignant du chariot de roulement (112), limitrophe de l'arête de raclage (142'), est formée sur l'élément de traitement de rail (140).

83. Dispositif selon la revendication 82,
caractérisé
en ce que la surface en pale (168) est formée sur une saillie s'éloignant du chariot de guidage (112), de l'élément de traitement de rail (140') en forme de disque.

84. Dispositif selon la revendication 82,
caractérisé
en ce que la surface en pale (168'') est formée par une encoche (170'') pratiquée dans l'élément de traitement de rail (140'') en forme de disque.

85. Dispositif selon l'une des revendications 80 à 84,
caractérisé
en ce que l'arête de raclage (142'') est ménagée de manière élastiquement déviable en direction (C) orthogonale à la direction de l'axe (Aₓ) du rail de guidage (110), sur une structure en disque de l'élément de traitement de rail (140'').

86. Dispositif selon l'une des revendications 80 à 85,
caractérisé
en ce que en ce que de deux éléments de traitement de rail (140, 158) se chevauchant l'un l'autre dans la direction périphérique du profilé du rail de guidage (110), l'un (158) est pourvu d'une découpe de bordure (164), qui est partiellement remplie par l'autre élément (140).

87. Dispositif selon l'une des revendications 1 à 86,
caractérisé
en ce que le support d'élément de traitement (14 ; 124) est formé par au moins un élément moulé (16 ; 126, 128) par coulage ou par injection en matière synthétique.

88. Dispositif selon l'une des revendications 1 à 87,
caractérisé
en ce que le ou les élément(s) de traitement de rail (34 ; 140, 158) est (sont) fabriqué(s) en métal, tel que de l'acier, du laiton, de la fonte métallique ou en matériau polymère ou en feutre.

89. Dispositif selon l'une des revendications 1 à 88,
caractérisé
en ce que le rail de guidage (110) présente au moins une surface latérale (110f) avec un renfoncement profilé de section trapézoïdale, les flancs de ce renfoncement profilé formant des voies de roulement (110k) pour chaque fois une circulation sans fin de rouleaux (116, 118) et en ce que sur le ou les élément(s) de traitement de rail (140) est formée une saillie trapézoïdale correspondante, dont les flancs (142) sont destinés à coopérer avec les voies de roulement (110k).

90. Dispositif selon l'une des revendications 66 à 89,
caractérisé
en ce que les éléments de traitement de rail (140, 148) s'appliquent l'un contre l'autre dans la zone de recouvrement (U).

91. Dispositif selon l'une des revendications 66 à 90,
caractérisé
en ce que les éléments de traitement de rail (140, 158) s'appliquent contre des surfaces de guidage (136a, 156a) décalées l'une par rapport à l'autre dans la direction de l'axe (Aₓ) du rail de guidage (110) et sensiblement orthogonales dans la direction de l'axe (Aₓ).

92. Dispositif selon la revendication 91,
caractérisé
en ce que les surfaces de guidage (136a, 156a) décalées l'une par rapport à l'autre dans la direction de l'axe et sensiblement orthogonales à la direction de l'axe, sont formées sur une première partie de support (126) de deux parties de support (126, 128) s'appliquant à plat l'une contre l'autre, en ce que les éléments de traitement de rail (140, 148) présentent une épaisseur différente, mesurée dans la direction de l'axe, suivant le décalage des surfaces de guidage (136a, 156a), en ce que dans l'élément de traitement de rail plus épais (158) des deux éléments de traitement de rail (140, 158) est formée une découpe de bordure (164) correspondant approximativement à l'épaisseur de l'élément de traitement de rail plus mince (140) des deux éléments de traitement de rail (140, 158) et en ce que l'élément de traitement de rail plus mince (140) des deux éléments de traitement de rail (140, 158) s'engagent dans la découpe de bordure (164) par une zone de bordure (166).

93. Dispositif selon la revendication 92,
caractérisé
en ce que la deuxième (128) des deux parties de support (126, 128) s'appliquant à plat l'une contre l'autre, s'applique contre les deux éléments de traitement de rail (140, 148) par une surface plane commune.

94. Dispositif selon l'une des revendications 66 à 93,
caractérisé
en ce qu'au moins l'un (140) des éléments de traitement de rail (140, 158) présente un jeu de guidage dans un plan orthogonal à la direction de l'axe (Aₓ), qui autorise une auto-adaptation de l'arête d'application (142) à la partie correspondante d'un parcours du profilé du rail de guidage (110), indépendamment de la précision de guidage de moyens de guidage (136b) agissant dans le plan orthogonal.

95. Dispositif selon l'une des revendications 1 à 94,
caractérisé par des moyens de maintien (170) non permanents sur le chariot de guidage (112) pour l'élément de traitement de rail (140, 158), qui, avant la mise en place du chariot de guidage (112) sur le rail de guidage (110), maintiennent l'élément de traitement de rail (140, 158) dans une position inactive, c'est-à-dire dans une position dans laquelle l'élément de traitement de rail (140, 158) reste désengagé du rail de guidage (110), lors de l'approche en position correcte du chariot de guidage (112) à une extrémité du rail de guidage (110), dans la direction de l'axe (Aₓ) du rail de guidage (110).

96. Dispositif selon l'une des revendications 1 à 41,
caractérisé
en ce que sur le support d'élément de traitement (14), formé en tant que support d'élément de lubrification, est disposé un contour périphérique intérieur (22), c'est-à-dire un contour périphérique (22) tourné vers le rail de guidage, qui s'applique - si on le souhaite par l'intermédiaire d'une garniture d'étanchéité - contre le rail de guidage (10) et qui sert de dispositif de raclage.

97. Dispositif selon la revendication 96,
caractérisé
en ce que le dispositif de raclage est formé de manière à empêcher d'une part la pénétration de particules de saleté entre le chariot de guidage (12) et le rail de guidage (10) et à limiter d'autre part le dosage de lubrifiant des voies de roulement essentiellement à la longueur axiale du chariot de guidage (12).
